(19) Europäisches Patentamt
European Patent Office
Office européen des brevets

(11) **EP 3 091 372 A1**

(12) **EUROPEAN PATENT APPLICATION**

(43) Date of publication:
**09.11.2016 Bulletin 2016/45**

(51) Int Cl.:
***G01V 3/08*** *(2006.01)*   ***G08G 1/042*** *(2006.01)*

(21) Application number: **15380017.2**

(22) Date of filing: **05.05.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Centro de Cálculo Igs Software S.L.**
**43140 La Pobla de Mafument (ES)**

(72) Inventors:
• **Cadenas, Francisco Javier Garcés**
**43140 La Pobla De Mafumet (ES)**
• **Rovirosa, Xavier Martí**
**43140 La Pobla De Mafumet (ES)**
• **Jungwirth, Tomás**
**43140 La Pobla De Mafumet (ES)**

(74) Representative: **Piotrowicz, Pawel Jan Andrzej et al**
**Venner Shipley LLP**
**Byron House**
**Cambridge Business Park**
**Cowley Road**
**Cambridge CB4 0WZ (GB)**

(54) **VEHICLE DETECTION SYSTEM**

(57)   A vehicle detection system (1) comprising at least one detection unit (2). Each detection unit corresponds to a detection volume ($S_n$) and each detection unit comprises at least two spaced-apart magnetic field sensors including first and second magnetic field sensors (6a, 6b; Figure 3). Each magnetic field sensor is configured to provide a series of instantaneous magnetic field measurements spaced apart in time. A processing unit (3) is configured to receive the time series of instantaneous magnetic field measurements. The processing unit is configured to store the time series of instantaneous magnetic field measurements in a table (8; Figure 5). The processing unit is configured to determine the presence of a vehicle (7) in each detection volume in dependence upon the magnetic field measurements in the table.

Fig. 1

**Description**

**Field of the invention**

The present invention relates to a system for detecting vehicles, in particular motor vehicles, such as motorcycles, automobiles, minibuses, buses, trucks or lorries.

**Background**

Vehicle detection systems can be used (particularly in urban areas) in many different ways. For example, they can be used to monitor traffic flow, to locate car parking spaces and to control traffic control signals (often referred to simply as "traffic lights").

Some vehicle detection systems use magnetic field sensors to sense local disturbances in the magnetic field of the Earth. For example, some vehicle detection systems employ a number of discrete magnetic field sensors, each sensor measuring the magnetic field in a respective volume of space. Each sensor records a baseline level of magnetic field when no vehicle is present and can detect the presence of a vehicle when the measured magnetic field deviates from the baseline level by more than a given amount. US 6 546 344 B1 describes an example of such a system.

However, when magnetic field sensors are positioned close together, for example in adjacent car parking spaces or traffic lanes, their measurements may be spurious or inaccurate. This may arise due to perturbations to the Earth's magnetic field resulting from the proximity of other vehicles in adjacent volumes of space. A magnetic field perturbation within an unoccupied volume of space may be large enough to trigger a false positive or to prevent detect of a vehicle.

**Summary**

The present invention seeks to provide an improved vehicle detection system based on measurements of magnetic fields.

According to a first aspect of the present invention there is provided a vehicle detection system comprising at least one detector. Each detector is configured to measure a magnetic field in a respective volume of space. Each detector comprises at least two spaced-apart magnetic field sensors, including first and second magnetic field sensors. Each magnetic field sensor is configured to provide a time series of instantaneous magnetic field measurements. The vehicle detection system also comprises a processing unit configured to receive the time series of instantaneous magnetic field measurements. The processing unit is also configured to store the time series of instantaneous magnetic field measurements in a table. The processing unit is also configured to determine presence of a vehicle in each volume in dependence upon the magnetic field measurements in the table.

This can be used to reduce or even avoid sensor blind spots due to uneven variations in magnetic field.

A vehicle detection system may comprise a third magnetic field sensor.
Magnetic field sensors may be spaced apart by at least 15 cm, at least 30 cm, at least 50 cm or by at least 1 m. Magnetic field sensors may be spaced apart by a distance between 30 cm and 40 cm.

The processing unit may be configured to determine a speed of a vehicle in a volume.
The processing unit may be configured to determine that a vehicle enters a volume.
The processing unit may be configured to determine that a vehicle exits a volume. The processing unit may be configured to determine the direction of travel of a vehicle through a volume.

Each detector may comprise first and second units which are spaced apart, and a link connecting the first and second units. The first and second magnetic field sensors may be disposed in the first and second units respectively. The link may be flexible. Each detector may comprise at least one further unit. Each further unit may contain a magnetic field sensor and be connected to the other units by one or more links.

The magnetic field sensors may be anisotropic magnetoresistance sensors. Each magnetic field sensor may be a three axis sensor. Each detection unit may be sealed against particles of dirt and/or dust. Each detection unit may be waterproof. Each detection unit may be encapsulated to the IP-68 certification standard.

The vehicle detection system may comprise a cable comprising two or more detectors spaced along the cable. The detectors may be connected to the cable in a bus configuration. The cable may comprise one or more energy lines and one or more data lines. The detectors 2 may be connected to the data line(s) and power line(s) in a bus configuration. The cable may comprise cladding or armour surrounding the energy line(s) and data line(s).

Thus, a failure of, or damage to a detector will not affect other detectors connected in parallel to the same cable.

The processing unit may be connected to two or more cables, each cable comprising two or more detectors positioned along the length of the cable.

The vehicle detection system may further comprise a short-range wireless transceiver configured to exchange signals with a corresponding short-range wireless transceiver of a vehicle so as to capture the identity of vehicle.

The processing unit may be configured to determine the presence of a vehicle in each volume in dependence upon the magnetic field measurements corresponding to two or more volumes.

Thus, the processing unit may be able to compensate (partially or fully) for magnetic field variations caused by a vehicle which is present in an adjacent volume of space.

This can improve the accuracy and reliability of detecting whether or not a vehicle is present in a volume of a space.

The processing unit may be configured to determine the presence of a vehicle in each volume in dependence upon the magnetic field measurements corresponding to two or more consecutive points in the time series.

Thus, the accuracy and reliability of detecting a vehicle in a volume of a space may be improved, because magnetic field variations during entry or exit of a vehicle may be larger than static changes in magnetic field before or after the entry or exit of the vehicle.

The processing unit may be configured to detect a start of an event and an end of an event in a volume in dependence upon a variance of the respective magnetic field measurements calculated based on a number of consecutive points in the time series. The processing unit may determine the presence of a vehicle in each detection volume in dependence upon a change in the respective magnetic field measurements between the start and end of an event.

The processing unit may be configured to store an occupancy flag corresponding to a detection volume in a second table in response to determining the presence of a vehicle in that detection volume. The processing unit may be configured to update the occupancy flag for a detection volume after the end of a detected event in that detection volume.

The processing unit may be configured to determine the presence of a vehicle in each detection volume in dependence upon the magnetic field measurements in the respective detection volume and also the magnetic field measurements in each adjacent detection volume which is flagged as occupied in the second table.

The processing unit may be configured such that when an event is not detected, the processor will execute a policing control check such that the occupancy flag of each detection volume is reversed if a threshold number of magnetic field measurements are consecutively stored in the table, each of the threshold number of magnetic field measurements being inconsistent with the respective occupancy flag stored in the second table.

The vehicle detection system may be for monitoring availability of car parking spaces. The vehicle detection system may be for monitoring the volume and speed of traffic on a road. The vehicle detection system may be for detecting the numbers and distribution of vehicles around a junction controlled by a traffic signalling system.

According to a second aspect of the invention there is provided a method comprising receiving a time series of instantaneous magnetic field measurements from at least two spaced apart magnetic field sensors including first and second magnetic field sensors. The method also comprises storing the time series of instantaneous magnetic field measurements in a table. The method also comprises determining presence of a vehicle in each volume in dependence upon the magnetic field measurements in the table.

The method may further comprise determining a speed of a vehicle in a detection volume.

The method may include capturing the identity of a vehicle by exchanging signals with a vehicle using a short range wireless communications protocol such as ZigBee (RTM).

The presence of a vehicle in each detection volume may be determined in dependence upon the magnetic field measurements corresponding to two or more detection volumes. The presence of a vehicle in each detection volume may be determined in dependence upon the magnetic field measurements corresponding to two or more consecutive points in the time series.

The method may include detecting a start of an event and an end of an event in a detection volume in dependence upon a variance of the respective magnetic field measurements calculated based on a number of consecutive points in the time series. The presence of a vehicle in each detection volume may be determined in dependence upon a change in the respective magnetic field measurements between the start and end of an event.

The method may include storing an occupancy flag corresponding to a detection volume in a second table in response to determining the presence of a vehicle in that detection volume.

The occupancy flag for a detection volume may be updated after the end of a detected event in the respective detection volume. The presence of a vehicle in each detection volume may be determined in dependence upon the magnetic field measurements in the respective detection volume and in each adjacent detection volume which is flagged as occupied in the second table.

When an event is not detected, the method may include executing a policing control check such that the occupancy flag of each detection volume is reversed if a threshold number of magnetic field measurements are consecutively stored in the table, each of the threshold number of magnetic field measurements being inconsistent with the respective occupancy flag stored in the second table.

According to a third aspect of the invention there is provided a computer program comprising instructions which, when executed by at least one processing unit, cause the processing unit to perform a method according to the second aspect.

According to a fourth aspect of the invention there is provided a computer readable medium (which may be non-transitory) storing the computer program according to the third aspect.

**Brief Description of the Drawings**

Certain embodiments of the present invention will now be described, by way of example, with reference to the accompanying drawings in which:

Figure 1 is a schematic plan view of a vehicle detection system used to monitor vehicle parking bays which includes a plurality of detectors and a processing unit;
Figure 2 is a schematic perspective view of a detector shown in Figure 1;
Figure 3 is a schematic side view of a detector shown in Figure 1;
Figure 4 is a schematic block diagram of a detector shown in Figure 1;
Figure 5 is a schematic block diagram of a processing unit shown in Figure 1;
Figure 6 is a schematic view of a data structure storing magnetic field measurements;
Figure 7 is a schematic view of the content of a data object shown in Figure 6;
Figures 8A to 8C schematically illustrate updating a data structure shown in Figure 6;
Figure 9A illustrates an example of a data structure used in a method of detecting the presence of a vehicle in a volume of space;
Figure 9B illustrates an example of a data structure used in a method of detecting the presence of a vehicle in a volume of space;
Figure 10A schematically shows a plot of magnetic field with position when two coupled vehicle parking bays are unoccupied by vehicles;
Figure 10B schematically shows a plot of magnetic field with position when one of two coupled vehicle parking bays is occupied by a vehicle;
Figure 11 is a process flow diagram of a first method of detecting the presence of a vehicle in a volume of space;
Figure 12 is a process flow diagram of a second method of detecting the presence of a vehicle in a volume of space;
Figure 13 is a schematic plan view of a vehicle detection system used to monitor vehicle numbers and speeds on a road; and
Figure 14 is a schematic plan view of a vehicle detection system used to help control an automated traffic signal system as a junction.

**Detailed Description of Certain Embodiments**

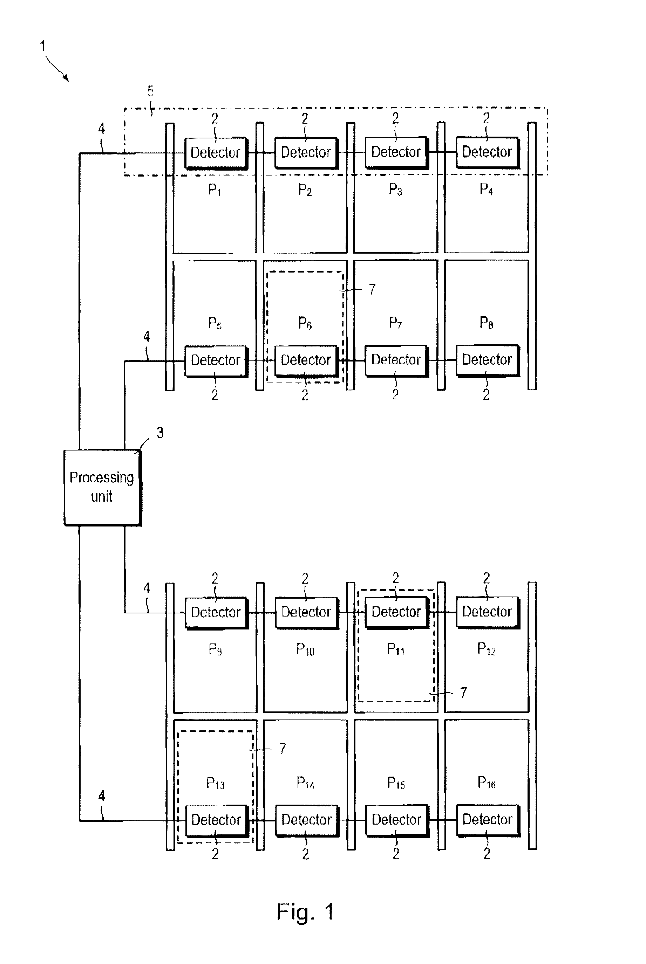

Referring to Figure 1, a vehicle detection system 1 is shown.

The vehicle detection system 1 is used for detecting the occupancy of bays $P_1$, $P_2$, ..., $P_{16}$ in a vehicle parking environment. The vehicle detection system 1 comprises at least one detector 2 and a processing unit 3. Each bay $P_1$, $P_2$, ..., $P_{16}$ contains a corresponding detector 2. The detector(s) 2 are connected to the processing unit 3 by a wired network in the form of one or more bus cables 4. The detector(s) 2 connected to a single bus cable 4 constitute a branch 5. Detectors 2 which are connected in a branch 5 are connected in a daisy chain configuration by the bus cable 4. The bus cable 4 may comprise one or more data lines (not shown) and one or more power lines (not shown). The data line(s) and power line(s) are contained within cladding or armour (not shown). The detectors 2 may be connected to the data line(s) and power line(s) in a bus configuration. In this way, if a detector 2 becomes inoperable, other detectors 2 in the same branch will not be affected. The detectors 2 need not be equally spaced along the length of the bus cable 4.

The detectors 2 are disposed underneath the corresponding bays P. For example, a detector 2 may be emplaced under a bay P, or a detector 2 may be placed in a slot or trench (not shown). A detector may be sealed in a pipe (not shown) which is emplaced in a slot or trench. A slot or trench containing detectors may be filled in or covered. The detectors 2 may be placed on the surface of the corresponding bays P and covered by a protective cover (not shown). There are sixteen bays $P_1$, $P_2$, ..., $P_{16}$ for parking vehicles. The number of detectors 2 and bays P is not limited to sixteen, and the vehicle detection system 1 may be extended to include a general number, $N$, of detectors 2, each contained by a respective bay $P_1$, $P_2$, ..., $P_n$, ..., $P_N$, wherein $P_n$ denotes the $n^{th}$ of $N$ vehicle parking bays.

Each detector 2 is sensitive to a corresponding volume of space S, which is to say that each detector 2 measures magnetic field(s) which may be influenced by the presence of magnetic materials within the corresponding volume of space S. For example, the $n^{th}$ detector 2 is sensitive to a corresponding $n^{th}$ volume of space $S_n$ which is focussed on the respective $n^{th}$ bay $P_n$. The $n^{th}$ detector 2 is sensitive to a corresponding $n^{th}$ volume of space $S_n$ which encompasses at least part of, for example all of, the volume above the respective $n^{th}$ bay $P_n$.

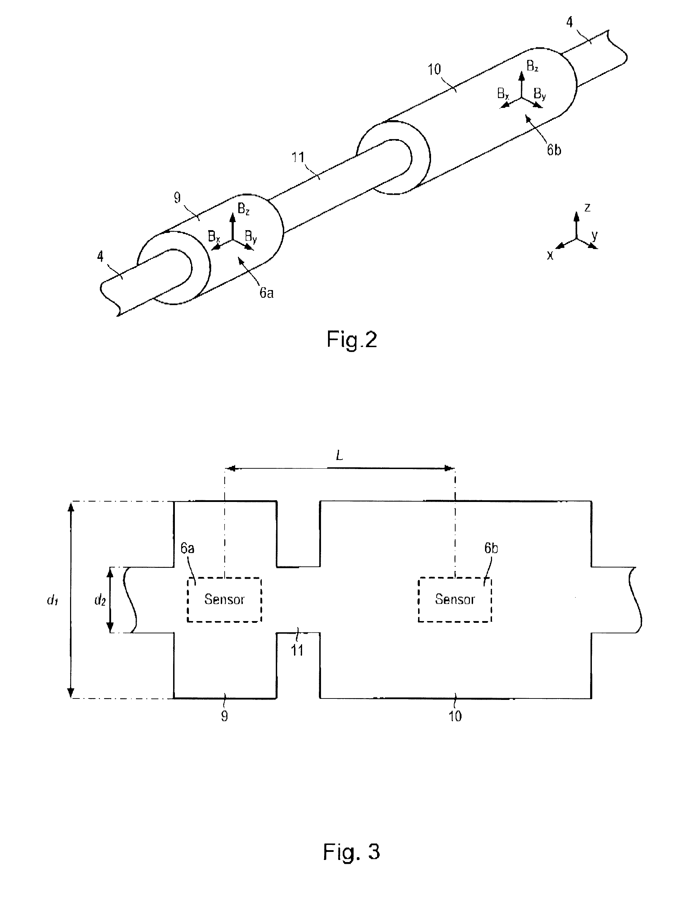

Each detector 2 includes first and second magnetic field sensors 6 (Figure 3). The first and second magnetic field sensors are spaced apart by a distance $L$ (Figure 3). Each of the magnetic field sensors 6 is configured to provide a time series of instantaneous measurements of magnetic field $\underline{B}(t)$, in which $t$ is the time at which the magnetic field was measured. Each magnetic field sensor provides magnetic field measurements $B_x$, $B_y$, $B_z$ corresponding to three orthogonal components of the vector magnetic field $\underline{B}(t)$. When a vehicle 7 does not occupy a bay $P_n$, the instantaneous magnetic field $\underline{B}(t)$ measured by the corresponding detector 2, which is sensitive to the respective volume of space $S_n$, represents a baseline magnetic field $\underline{B}_o$ arising from the Earths magnetic field and the ambient environment. The baseline magnetic field $\underline{B}_o$ may be substantially invariant across a monitored environment, or the baseline magnetic field $\underline{B}_o$ may vary with position, i.e. $\underline{B}_o(\underline{x})$ in which x is a position vector, depending on the amount and distribution of magnetic material in the ambient environment. The baseline magnetic field $\underline{B}_o$ may also vary in time.

When a vehicle 7 occupies a parking bay $P_n$, elements of the vehicle 7 that have high relative magnetic permeability $\mu/\mu_o$ will produce localised distortions of the baseline magnetic field $\underline{B}_o$. As a result, the instantaneous magnetic field $\underline{B}(t)$ measured by the $n^{th}$ detector 2, which is sensitive to the respective volume of space $S_n$ focussed on the parking bay $P_n$, may deviate from the baseline $\underline{B}_o$ values. Depending on the spatial extent of the magnetic field distortions produced by the vehicle 7, the instantaneous magnetic fields $\underline{B}(t)$ measured by detectors 2 corresponding to nearby/adjacent bays $P_p$, which are nearby/adjacent to the occupied bay $P_n$, may also deviate from the baseline $\underline{B}_o$ values.

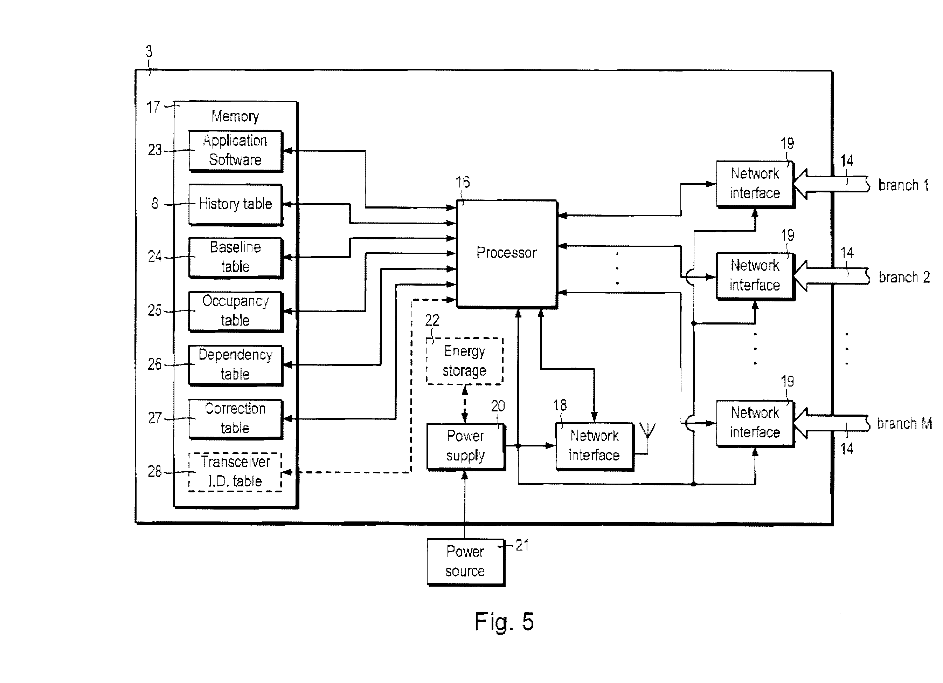

The processing unit 3 receives the time series of instantaneous magnetic field $\underline{B}(t)$ measurements from the pair of magnetic field sensors 6 in each of the detectors 2. The processing unit 3 stores the time series of instantaneous magnetic field measurements $\underline{B}(t)$ in a magnetic field history table 8 (Figure 5). The processing unit determines the presence or absence of a vehicle 7 in each bay $P_n$ in dependence upon the magnetic field measurements $\underline{B}(t)$ stored in the history table 8. The presence or absence of a vehicle 7 in the $n^{th}$ bay $P_n$ is determined in dependence upon magnetic field measurements $\underline{B}(t)$ from the $n^{th}$ detector and also from nearby/adjacent detectors 2.

The detectors 2 may additionally support wireless personal area network communications (also referred to herein as "WPAN") protocols such as ZigBee(RTM), Bluetooth (RTM) or Z-Wave (RTM), and vehicles 7 may be fitted with WPAN transceivers (not shown). The processing unit 3 may include information to enable determination of whether a detected vehicle 7 includes a recognised WPAN transceiver.

The vehicle detection system 1 may detect the occupancy of parking bays $P_n$ in a vehicle parking environment which is an open air vehicle park or lot, a vehicle parking structure provided across at least one floor of a building and/or at least one basement level, or in an on-street vehicle parking environment. The vehicle detection system 1 may detect motor vehicles, such as, for example, motorcycles, automobiles, minibuses, buses, trucks, vans or lorries.

Referring to Figures 2 and 3, the detector is generally elongate and each detector includes first and second units 9, 10. The first and second units 9, 10 are spaced apart and connected by a link member 11. The first magnetic field sensor 6a is disposed in the first unit 9 and the second magnetic field sensor 6b is disposed in the second unit 10. The link member 11 is flexible. Alternatively, the link member 11 need not be flexible and may be rigid.

The first and second magnetic field sensors 6a, 6b are disposed within the first and second units 9, 10 such that the first and second magnetic field sensors 6a, 6b are separated by a centre-to-centre distance $L$. The distance $L$ may be at least 15 cm, at least 30 cm, at least 50 cm or at least 1 m. The distance L may be up to 3 m. Preferably, the distance is between about 30 cm and 40 cm, for example, about 35 cm. The first and second units 9, 10 have a diameter $d_1$ of approximately 22 mm. The link member 11 has a diameter $d_2$ of approximately 10 mm. The bus cable 4 may have the same or similar diameter to the link member 11. However, other dimensions $d_1$, $d_2$ may be used for the first and second units 9, 10, the link member 11 and the bus cable 4, depending on the dimensions of the components used to manufacture the detector 2.

The detector(s) 2 are sealed to prevent the ingress of particles such as particles of dirt and/or dust. The detector(s) 2 are sealed so as to be waterproof. The detectors are encapsulated to the IP-68 certification standard, in which IP stands for Ingress Protection. The IP-68 standard refers to dust tight protection against particle ingress and waterproof to immersion beyond 1 m depth of water.

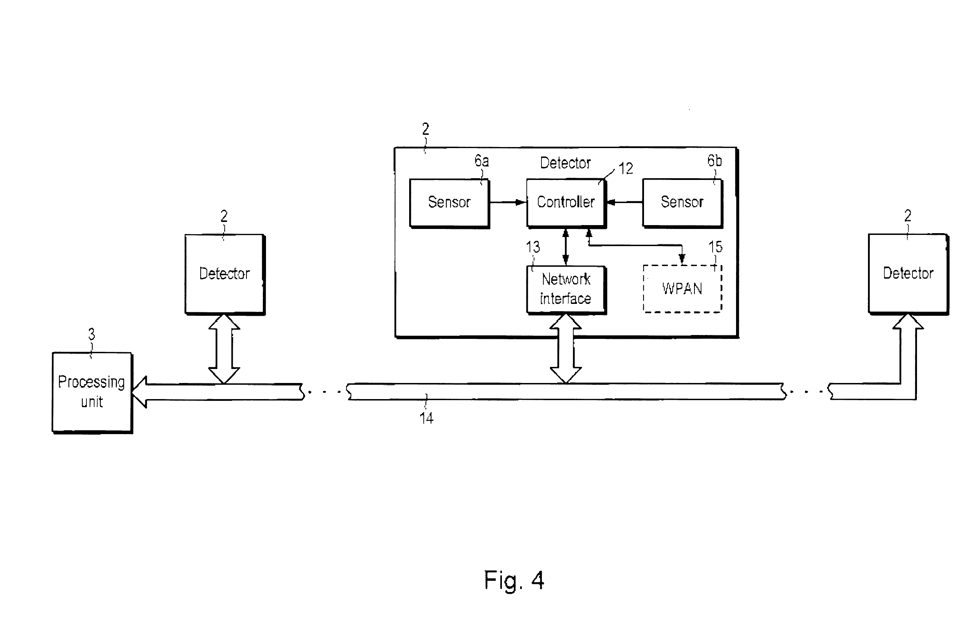

Referring also to Figure 4, the detector 2 includes the first and second magnetic field sensors 6a, 6b, a controller 12 and a network interface 13 connecting the detector to a bus 14. The detector may optionally include a WPAN module 15.

The second unit 10 is longer than the first unit 9 and the second unit 10 accommodates the controller 12, network interface 13 and optionally the WPAN module 15. However, the controller 12, network interface 13 and optionally the WPAN module 15 may instead be provided in the first unit or distributed between the first and second units 9, 10.

The controller 12 receives a first set of instantaneous magnetic field measurements $\underline{B}_a(t)$ having orthogonal components $B_x^a(t), B_y^a(t), B_z^a(t)$ from the first magnetic field sensor 6a. The controller receives a second set of instantaneous magnetic field measurements $\underline{B}_b(t)$ having orthogonal components $B_a^b(t), B_y^b(t), B_z^b(t)$ from the second magnetic field sensor 6b. The first and second magnetic field sensors 6a, 6b are sensitive to respective first and second sub-volumes of space which intersect by a fraction which depends on the distance $L$. The volume of space $S_n$ to which the $n^{th}$ detector 2 is sensitive is a union of the first and second sub-volumes to which the respective first and second magnetic field sensors 6a, 6b of the $n^{th}$ detector are sensitive.

The controller 12 may additionally send and receive challenge/response data to the WPAN module 15 for exchanging information with a NFC transceiver on a vehicle 7 to identify the vehicle 7. The device 2 communicates with the processing unit 3 via the network interface 13 and a bus 14. The bus 14 is disposed within the bus cable 4. The bus cable 4 and the interface with the detector 2 are encapsulated to the IP-68 certification standard.

Upon receiving a request from the processing unit 3, the detector 2 sends the first and second sets of magnetic field measurements $\underline{B}_a(t)$ and $\underline{B}_b(t)$ to the processing unit 3. The controller 12 is a microcontroller in the form of an ATMEL ATmega328P incorporating an Arduino (RTM) Bootloader microcontroller. However, the controller 12 may alternatively be provided by any other suitable microcontroller.

The magnetic field sensors 6 are anisotropic magnetoresistance sensors. Each magnetic field sensor 6 is a three-axis sensor providing instantaneous magnetic field measurements $\underline{B}(t)$ with three mutually orthogonal components $B_x(t), B_y(t), B_z(t)$. The first and second magnetic field sensors 6a, 6b take the form of Honeywell HMC5883L magnetic field 3D sensors, which have a resolution of $2 \times 10\text{-}7$ T and a magnetic field range of $\pm 8 \times 10\text{-}4$ T. The Honeywell HMC5883L magnetic field 3D sensors can provide measurements at a maximum output rate of 160 Hz, using a 12-bit ADC.

The controller 12 may create and update a local cache (not shown) in local memory (not shown) to store a number of recent values of the six components of the magnetic field measurements $\underline{B}_a(t), \underline{B}_b(t)$. The local cache may be updated at a frequency up to the maximum measurement frequency of the magnetic field sensors 6, and may store recent values covering 128 sampling intervals. For example, with sampling every 0.3 milliseconds, a previous time interval of 38.4 milliseconds may be stored. The local cache may be updated at up to 160 Hz. The controller 12 may use the detector history table to filter out electromagnetic noise components of frequency having a noise frequency higher than 25 Hz and less than half of the maximum measurement frequency. The controller 12 may filter out electromagnetic noise components having frequencies between 25 and 80 Hz.

The WPAN module 15 includes an antenna capable of bi-directional communication with an WPAN transceiver (not shown) which may be attached to a vehicle 7. The WPAN module 15 has a transmission power allowing communication with a transceiver up to 5 m away. The WPAN module is according to the Zigbee (RTM) standard.

When the processing unit 3 determines that a vehicle 7 has entered the bay $P_n$ corresponding to a detector 2, the processing unit 3 may send challenge message data (not shown) for transmission by the WPAN module 15. The controller 12 receives the challenge message data and directs the WPAN module 15 to transmit a challenge message (not shown). The detector 2 waits to receive a response message (not shown), and any response message data (not shown) received by the WPAN module 15 is relayed to the processing unit 3. The communication protocol employed by the WPAN module 15 maybe encrypted using conventional or application specific algorithms. The WPAN module 15 may communicate with WPAN transceivers which are external tokens employing Zigbee (RTM), smartphones using Zigbee (RTM), smartphones having Zigbee (RTM)-WiFi dongles or other similar devices.

The network interface 13 connects the controller 12 to the bus 14. The network interface 13 need not be a separate module to the controller 12, and may alternatively be integrated into the controller 12. The network interface 13 may take the form of a Maxim MAX3440EESA+ Transmitter/Receiver RS-485 for interfacing with the RS-484 bus 14. The Maxim MAX3440EESA+ Transmitter/Receiver RS-485 has a single supply voltage in the range 4.75 to 5.25 V and a data rate of 0.25 Mbits/s. The bus 14 is an RS-485 bus with a four-wire cable including two wires used for supplying power and two wires for data signalling.

One or more detectors 2 are arranged in a daisy chain configuration along bus cable 4 and connected in a bus configuration via the bus 14 to form a branch 5. The detectors are connected in parallel to the two data wires and the two power wires. The branch 5, including the one or more detectors 2 and the interconnecting bus cables 4, is encapsulated to help protect the interconnections from ingress of particles or fluids. Bus cable 4 and detectors 2 have connectors (not shown) which may be reversibly coupled to form a connection encapsulated to the IP-68 certification standard. In this way, the overall branch 5 is encapsulated to the same IP-68 certification standard as the devices. The branch 5 may be inserted into a pipe (not shown) which is subsequently sealed. Inserting the branch 5 into a pipe may help to protect the branch 5, especially when the branch 5 is installed in a trench without back-filling the trench. For example, a pipe may prevent or reduce movement of a branch 5 due to, for example, flooding or subsidence.

Although the detectors include first and second sensors 6a, 6b which measure respective mutually orthogonal components of magnetic field $B_x(t), B_y(t), B_z(t)$, the measurement axes of the first and second magnetic field sensors 6a, 6b need not be aligned with each other and, in general, will not be aligned. The measurement axes of any detector 2 need not be aligned with those of any other detectors 2 in the same branch 5, or in any other branches 5.

The bus 14 need not be an RS-485 bus and other types of bus may be used instead. Alternatively, separate cables may provide power and Ethernet, Firewire or similar cables may be used for data transmission. Where separate power cables are used, the network interface 13 may connect the detectors 2 to the processing device using wireless communications such as, for example IEEE 802.11 or similar.

Up to fifty detectors 2 may be provided in a single branch 5, with a bus cable 4 length of up to 800 metres. However, larger numbers of detectors may be supported by a single branch 5 when data cables with a higher bandwidth are used. Total length of a bus cable 4 may be extended by using, for example, larger voltages, lower impedance cables or repeaters (not shown) spaced along the length of the bus cable 4.

Referring to Figure 5, the processing unit 3 includes a processor 16, memory 17, an external network interface 18, one or more bus network interfaces 19 and a power supply 20.

The external network interface 18 connects the processing unit 3 to local networks or the internet, using wired or wireless connections. A server (not shown) may execute a client (not shown) which communicates with one or more processing units 3 via a local network or the internet. In this way several processing units 3, each corresponding to a different section or area of a parking environment, may be monitored or controlled by an operative. In this way geographically separated or distributed parking environments may be monitored by an operative. Additionally or alternatively, users or prospective users of a parking environment may execute a client, for example on a mobile device, which may inform them of the availability of vehicle parking bays.

Each bus network interface 19 communicates with a bus 14 which connects to a branch 5 including one or more detectors 2. The processor 16 sends requests addressed to specific detectors 2 belonging to the branch 5, and receives the requested magnetic field measurements $\underline{B}_a(t)$, $\underline{B}_b(t)$ via the bus network interface 19. The bus network interface 19 may include a conversion stage between RS-485 bus on the branch 5 side and a different type of bus on the processor 16 side, such as, for example, USB. The bus network interface may take the form of a Maxim MAX3440EESA+ Transmitter/Receiver RS-485.

The processing unit 3 includes $M$ bus network interfaces 19 (where M is a positive non-zero integer) communicating with a corresponding number $M$ of branches 5. The processing unit 3 supports up to sixteen branches such that $M \leq 16$. However, the processing unit 3 may support a larger or smaller number of branches, depending on the capabilities of the processor 16 and memory 17 used.

The power supply 20 receives power from an external power source 21 and supplies it to the processing unit 3. The power supply 20 powers the processor 16, the external network interface 18 and the bus network interfaces 19. The bus network interfaces 19 supply power to the individual detectors 2 via the buses 14. The power source 21 may be a mains electrical supply, or it may be a local source such as, for example, a photovoltaic panel (not shown) or similar energy harvesting device.

The processing unit 3 may optionally include energy storage 22, for example, a secondary battery such as a storage or rechargeable battery. The energy storage 22 may provide backup power to the power supply 20 when the power source 21 is mains or grid electricity. Alternatively, when the power source 21 is an energy harvesting device, the power supply 20 may store energy in the energy storage 22 when the power source 21 is providing surplus power, for example during the day, so that the energy storage 22 may power the processing unit 3 when the power source does not provide power, for example at night.

The memory 17 stores the history table 8, application software 23 for the processing unit 3, a baseline table 24, an occupancy table 25, a dependency table 26, and a correction table 27. When the detectors 2 include a WPAN module 15, the memory 17 additionally includes a transceiver identity table 28. Any additional variables, arrays, data structures, data pages or data objects described herein in relation to methods of detecting vehicles 7 may, unless otherwise described, be assumed to be created by the processor 16 and stored in or retrieved from the memory 17 as required.

The transceiver identity table 28 includes a list of challenge/response message data items (not shown). When the processing unit 3 determines that a vehicle 7 has entered a bay $P_n$ containing a detector 2, the processing unit 3 sends challenge message data (not shown) to the detector 2 for transmission by the WPAN module 15. The detector 2 waits to receive a response message (not shown), and any response message data (not shown) received by the WPAN module 15 is sent to the processing unit 3. If no response message data is received within a configurable elapsed time period, or if the response message data does not match a correct response stored in the transceiver identity table 28, then an alarm flag (not shown) is set on the processing unit 3. The alarm flag may be communicated or reported to an operative monitoring the vehicle detection system 1 via the external network interface 18 and a local network or the internet.

The challenge/response message data items stored in the transceiver identity table 28 can be user specific and may be created, delivered and/or monitored by an operative via the external network interface 18 and local networks or the internet. For example, the challenge message data may simply be a request for an identity string (not shown) and specific identity strings may be assigned to specific vehicles 7 operated by authorised users. In such a case, the transceiver identity table may store a list of the identity strings which are authorised for each bay $P_n$, or for a group of bays $P_j$, ..., Pk, in which $j$, $k$ are integers less than the total number $N$ of bays $P_n$/detectors 2. For example, the vehicles 7 registered to employees of company A may be authorised to park in any bay from $P_j$, ..., Pk, whereas other vehicles 7 may not be authorised. A set of allowed bays $P_n$ for a specific identity string need not be consecutively numbered.

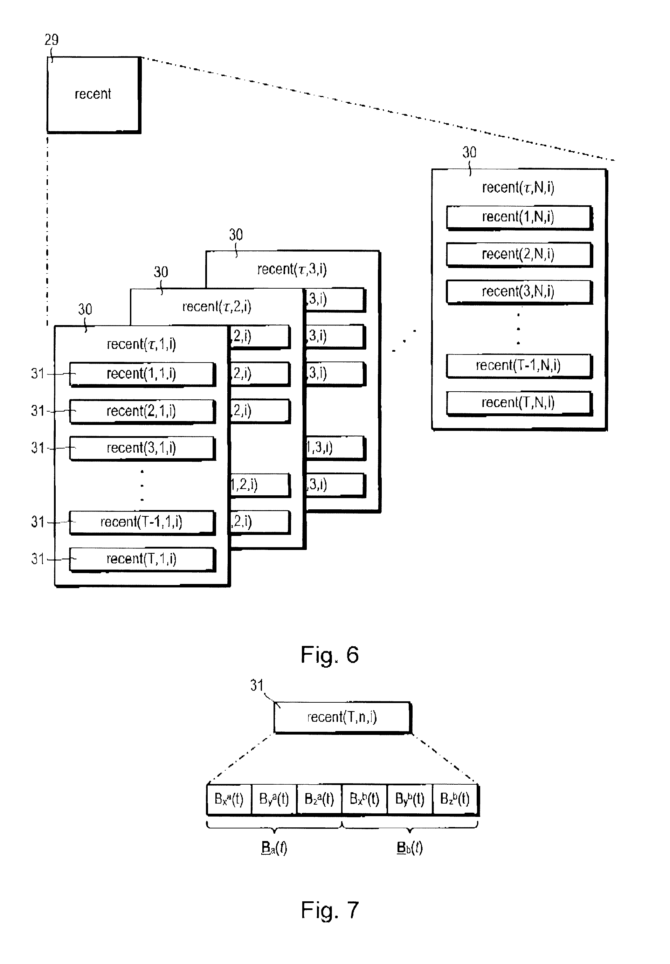

Referring also to Figures 6 and 7, the history table 8 stores a time history for the six magnetic field measurements $B_x{}^a(t)$, $B_y{}^a(t)$, $B_z{}^a(t)$, $B_x{}^b(t)$, $B_y{}^b(t)$, $B_z{}^b(t)$ corresponding to the pair of magnetic fields sensors 6a, 6b for each individual detector 2. The processing unit 3 receives magnetic field measurements $\underline{B}_a(t)$, $\underline{B}_b(t)$ from all $M$ branches 5 independently and simultaneously, and updates the history table 8 with the most recently received values. Each branch 5 reports magnetic field measurements $\underline{B}_a(t)$, $\underline{B}_b(t)$ at a maximum rate of 75 Hz/$N_m$, in which $N_m$ is the total number of detectors 2 inside the $m^{th}$ branch 5 out of $M$ branches 5 in total. The overall update rate of the history table 8 is determined according to the largest number of detectors $N_m$ in a single branch 5. It is preferable for the numbers of detectors 2 connected in each branch 5 to be balanced in order to maximise the refresh rate for a given total number $N$ of detectors 2.

The history table 8 includes a data structure 29 also referred to herein as $recent(\tau,n,i)$, in which $\tau$ is an integer index which runs $1 \leq \tau \leq T$ such that $\tau=T$ corresponds to the most recent measurements $\underline{B}_a(t)$, $\underline{B}_b(t)$ and $\tau=1$ corresponds to the furthest point in the past for which measurements $\underline{B}_a(t)$, $\underline{B}_b(t)$ are stored, in which $n$ is an integer index which runs $1 \leq n \leq N$ such that $n$ refers to the $n^{th}$ detector 2 out of $N$ detectors in total, in which $i$ is an integer index such that $i=1$ corresponds to $B_x{}^a(t)$, $i=2$ corresponds to $B_y{}^a(t)$, $i=3$ corresponds to $B_z{}^a(t)$ and $4 \leq i \leq 6$ corresponds to $B_x{}^b(t)$, $B_y{}^b(t)$ and $B_z{}^b(t)$ respectively. In this case, $T=128$ and one detector 2 corresponds to each of $N$ vehicle bays $P_n$. Alternatively, the history table 8 may store magnetic field measurements $\underline{B}_a(t)$, $\underline{B}_b(t)$ corresponding to more or fewer than $T=128$ different time intervals, limited only by the available capacity of the memory 17.

The data structure 29 $recent(\tau,n,i)$ includes a number, $N$, of page objects 30. Each page object 30 stores the magnetic field measurements $\underline{B}_a(t)$, $\underline{B}_b(t)$ received from the $n^{th}$ detector 2, for all time intervals and all field components, i.e. for $1 \leq \tau \leq T$ and $1 \leq i \leq 6$. Each page object 30 includes a number, $T$, of data objects 31. Each data object 31 stores the magnetic field measurements $\underline{B}_a(t)$, $\underline{B}_b(t)$ received from the $n^{th}$ detector 2 at the

$(T-\tau)^{th}$ time interval before the most recent measurement. Each data object 31 includes the six individual measured magnetic field values $B_x{}^a(t)$, $B_y{}^a(t)$, $B_z{}^a(t)$, $B_x{}^b(t)$, $B_y{}^b(t)$, $B_z{}^b(t)$ measured by the $n^{th}$ detector 2 at the $(T-\tau)^{th}$ time interval.

For example, if measurements $\underline{B}_a(t)$, $\underline{B}_b(t)$ are reported at intervals of $\delta t$ and the most recent measurements occurred at a time $t=t_T$, then $recent(\tau,n,i)$ stores the values corresponding to $t=t_T - \delta t.(T-\tau)$. The sequential reporting of magnetic field measurements $\underline{B}_a(t)$, $\underline{B}_b(t)$ from the detectors 2 within the $m^{th}$ branch 5 means that the same $\tau$ value may correspond to slightly different (shifted) actual measurement times in each of the respective data objects 31 for the $m^{th}$ branch.

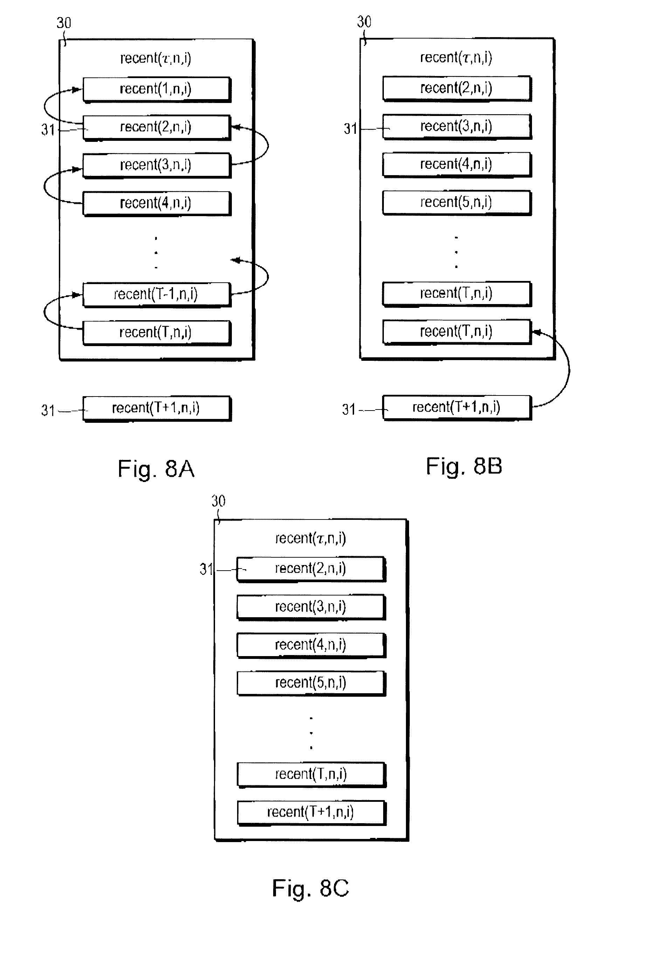

Referring also to Figures 8A to 8C, the procedure for updating a page object 30 of the data structure 29 $recent(\tau, n,i)$ to include a data object 31 storing the most recently received measured magnetic field values $\underline{B}_a(t)$, $\underline{B}_b(t)$ is illustrated. Until the updating procedure is completed, reference will be made to the $\tau$ index values of data objects 31 prior to the updating procedure.

Referring to Figure 8A, the processing unit 3 receives magnetic field measurements $\underline{B}_a(t)$, $\underline{B}_b(t)$ from each of $N$ detectors 2. The processing unit 3 creates a new data object 31, $recent(T+1,n,i)$ for the $n^{th}$ detector 2, to store most recently measured magnetic field values $B_x{}^a(t)$, $B_y{}^a(t)$, $B_z{}^a(t)$, $B_x{}^b(t)$, $B_y{}^b(t)$, $B_z{}^b(t)$ measured by the $n^{th}$ detector 2. The processing unit 3, increments each existing data object 31 stored on the page object 30 corresponding to the $n^{th}$ detector to a lower value of the index $\tau$. For example, the processing unit 3 overwrites the oldest stored data object 31, $recent(1, n,i)$ with the second oldest data object 31, $recent(2,n,i)$, i.e. the $\tau=2$ entry is shifted to the $\tau=1$ position. The processing unit 3 also overwrites $recent(2,n,i)$ with $recent(3,n,i)$, the processing unit overwrites $recent(3,n,i)$ with $recent(4,n, i)$, and continues in this way until $recent(T-1,n,i)$ has been overwritten by $recent(T,n,i)$.

Referring to Figure 8B, the page object 30 corresponding to the $n^{th}$ detector has the data object $recent(2,n,i)$ corresponding to the index $\tau=1$, the data object $recent(3,n,i)$ corresponding to $\tau=2$ and so on until the indexed $\tau =T$ and $\tau = T-1$ both correspond to the same data object $recent(T,n,i)$. The data object 31 storing the most recent magnetic field measurements $\underline{B}_a(t)$, $\underline{B}_b(t)$ from the $n^{th}$ detector 2, $recent(T+1,n,i)$, is written to the $\tau=T$ index position.

Referring to Figure 8C, the page object 30 corresponding to the $n^{th}$ detector has been updated so that each data object 31 has been incremented by an amount corresponding to one time interval between obtaining magnetic field measurements $\underline{B}_a(t)$, $\underline{B}_b(t)$. Each time the processing unit 3 receives new magnetic field measurements $\underline{B}_a(t)$, $\underline{B}_b(t)$, the page object 30 corresponding to each of the $N$ detectors 2 is updated in this way, such that the history table 8 always holds the most recent magnetic field measurements $\underline{B}_a(t)$, $\underline{B}_b(t)$ and $T-1$ prior measurements for each detector 2.

Referring again to Figure 5, the baseline table 24 stores a data structure referred to herein as $ref(n,i)$, which is an array with $N$ rows and $6$ columns, in which $n$ and $i$ are integer indexes defined in the same way as for the data structure $recent(T,n,i)$. The $n^{th}$ row of $ref(n,i)$ stores the six individual measured magnetic field components $B_x{}^{ao}$, $B_y{}^{ao}$, $B_z{}^{ao}$, $B_x{}^{bo}$, $B_y{}^{bo}$, $B_z{}^{bo}$ of the baseline field $\underline{B}_o$ measured by the $n^{th}$ detector 2 when there are no vehicles 7 present in the $n^{th}$ bay $P_n$ or in any other bay $P_p$ which is at least partially encompassed by the volume of space $S_n$ to which the $n^{th}$ detector 2 is sensitive. For example, when no vehicles 7 are present in the $n^{th}$ bay $P_n$ or any other bays $P_p$ which are neighbouring/adjacent or otherwise coupled to the $n^{th}$ bay $P_n$, as described hereinafter in relation to the dependency table 26. The six individual measured magnetic field components $B_x{}^{ao}$, $B_y{}^{ao}$, $B_z{}^{ao}$, $B_x{}^{bo}$, $B_y{}^{bo}$, $B_z{}^{bo}$ of the baseline field $\underline{B}_o$ measured by the $n^{th}$ detector 2 and stored in the array $ref(n,i)$ will generally be different for each sensor 6 of each detector 2, even when the baseline field $\underline{B}_o$ itself is substantially invariant with position. This is because the detection axes of the sensors 6 and detectors 2 need not be aligned with one another and, in general, are not aligned with one another.

The values stored by the baseline table 24 in the data structure $ref(n,i)$ may be measured at times when the parking environment is empty, for example, when the parking environment is closed. The values stored by the baseline table 24 may be periodically updated during use of the vehicle detection system 1, for example, by measuring magnetic field values from the $n^{th}$ detector 2 when there are no vehicles 7 present in the $n^{th}$ bay $P_n$ or in any other bay $P_p$ which

is neighbouring/adjacent or otherwise coupled to the $n^{th}$ bay $P_n$, as described hereinafter in relation to the dependency table 26.

The occupancy table 25 stores a data structure referred to herein as *occupy(n)*, which is an array with $N$ entries, in which $n$ is an integer index defined in the same way as for the data structure *recent(T,n,i)*. The $n^{th}$ entry of *occupy* stores the occupancy state of the $n^{th}$ bay $P_n$ such that *occupy(n)* = o if the $n^{th}$ bay $P_n$ is unoccupied and *occupy(n)* = 1 if the $n^{th}$ bay $P_n$ is occupied.

The dependency table 26 stores a data structure referred to herein as *depend(n,p)*, which is an array with $N$ rows and $N$ columns, in which $n$ is an integer index defined in the same way as for the data structure *recent(τ,n,i)* and in which $p$ is an integer index which runs $1 \le p \le N$, such that $n$ and $p$ refer to the $n^{th}$ and $p^{th}$ detectors 2 and bays $P_n$, $P_p$ respectively. If the $n^{th}$ bay $P_n$ is sufficiently close to the $p^{th}$ bay $P_p$ that when a vehicle is parked in the $n^{th}$ bay $P_n$ the magnetic fields in the $p^{th}$ bay $P_p$ will measurably deviate from the baseline field $\underline{B}_o$, and vice versa, then *depend(n,p)* = 1 and also *depend(p,n)* = 1. The entries *depend(n,n)* = o along the array diagonal. When the $n^{th}$ and $p^{th}$ bays $P_n$, $P_p$ interact in this way, they may also be referred to herein as "coupled". Another way to describe such coupling is that if the $n^{th}$ bay $P_n$ is sufficiently close to a $p^{th}$ bay $P_p$ that the volume of space $S_n$ to which the $n^{th}$ detector is sensitive at least partially encompasses the $p^{th}$ bay $P_p$, then the $n^{th}$ and $p^{th}$ bays $P_n$, $P_p$ are coupled.

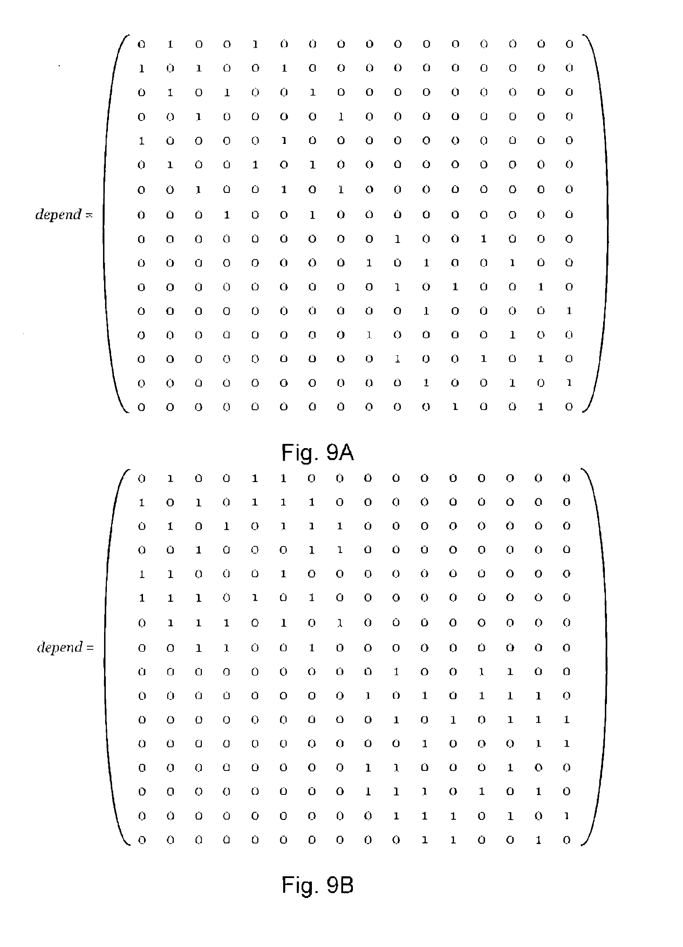

Referring to Figure 9A, the data structure *depend(n,p)* for the bays $P_1$, $P_2$, ..., $P_{16}$ is illustrated for the example shown in Figure 1 in a case where only bays $P_n$ which are directly adjacent (nearest neighbours) are coupled and those which are diagonally adjacent (next nearest neighbours)are not coupled.

Referring to Figure 9B, the data structure *depend(n,p)* for the bays $P_1$, $P_2$, ..., $P_{16}$ is illustrated for the example shown in Figure 1 in a case where diagonally adjacent bays $P_n$ (next nearest neighbours) are coupled in addition to directly adjacent bays $P_n$ (nearest neighbours).

Coupling between $n^{th}$ and $p^{th}$ bays $P_n$, $P_p$ need not be limited to nearest neighbour or next nearest neighbour bays $P_p$. For example, any pair of bays $P_n$, $P_p$ may be coupled to one another in the event that a vehicle parked in one would produce a measurable deviation of the measured magnetic field values $\underline{B}_a(t)$, $\underline{B}_b(t)$ away from $\underline{B}_o$ at the detector 2 corresponding to the other. In other words, if the volume of space $S_n$ to which the $n^{th}$ detector 2 is sensitive at least partially encompasses the $p^{th}$ bay $P_p$, then the $n^{th}$ and $p^{th}$ bays $P_n$, $P_p$ may be coupled.

Referring to Figure 5, the correction table 27 stores a data structure referred to herein as *correct(p,n,i)*, in which $n$ and $p$ are both integer indexes defined in the same way as for the data structure *depend(n,p)* and $i$ is an integer index defined in the same way as for the data structure *recent(τ,n,i)*. The entry of the data structure *correct (p,n,i)* corresponding to the $n^{th}$ and $p^{th}$ bays $P_n$, $P_p$ only holds non-zero values if the corresponding entry of the data structure *depend(n,p)* is equal to one. The entry of the data structure *correct(p,n,i)* stores six individual magnetic field correction values $\delta B_x^a$, $\delta B_y^a$, $\delta B_z^a$, $\delta B_x^b$, $\delta B_y^b$, $\delta B_z^b$ for adjusting the baseline values $B_x^{ao}$, $B_y^{ao}$, $B_z^{ao}$, $B_x^{bo}$, $B_y^{bo}$, $B_z^{bo}$ stored by *ref(n,i)* for the $n^{th}$ detector 2 in the case that the $p^{th}$ bay $P_p$ is occupied by a vehicle 7.

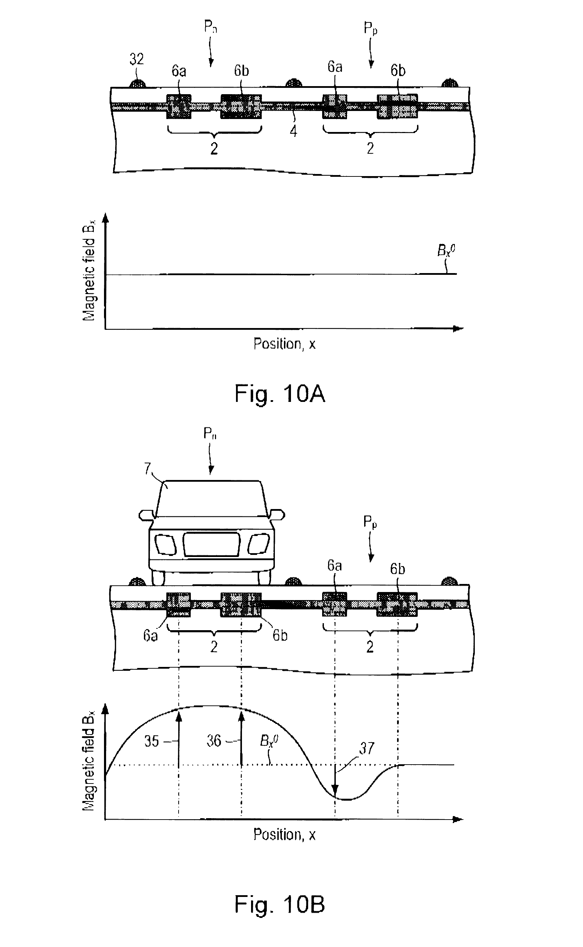

Referring also to Figure 10A, a bay $P_n$ and an adjacent bay $P_p$ are both unoccupied and are delimited by parking bay markings 32. An $n^{th}$ detector 2 is disposed under the $n^{th}$ bay and is sensitive to an $n^{th}$ volume of space $S_n$. A $p^{th}$ detector 2 is disposed under the $p^{th}$ bay and is sensitive to a $p^{th}$ volume of space Sp. The $n^{th}$ and $p^{th}$ detectors 2 are consecutively connected as part of the same branch 5. However, a pair of coupled bays $P_n$, $P_p$ need not correspond to consecutive detectors 2 on the same branch 5. It should be understood that the $p^{th}$ bay $P_p$ may be any bay $P_p$ which is coupled to the $n^{th}$ bay $P_n$ such that *depend(p,n)* = 1 and *depend(n,p)* = 1. The detectors 2 are disposed beneath the respective bays $P_n$, $P_p$ by emplacing the detectors 2 underneath the floor of the parking bays $P_n$, $P_p$.

In the absence of any nearby vehicles 7, the first and second magnetic field sensors 6a, 6b of the $n^{th}$ and $p^{th}$ detectors 2 measure the baseline magnetic field $\underline{B}_o$. The baseline magnetic field $\underline{B}_o$ arises from the Earth's magnetic field, potentially modified by any magnetic materials present in the ambient environment. For example, steel girders in a building structure. The baseline magnetic field $\underline{B}_o$ is shown as being substantially invariant with position. However, in some parking environments the baseline magnetic field $\underline{B}_o$ in the absence of any vehicles may vary between or even within adjacent bays $P_n$, $P_p$ due to ambient magnetic materials, i.e. the baseline magnetic field may be position dependent $\underline{B}_o(\underline{x})$.

Referring also to Figure 10B, when a vehicle 7 occupies the $n^{th}$ bay $P_n$, elements of the vehicle 7 having high relative magnetic permeability $\mu/\mu_o$ will distort the baseline magnetic field $\underline{B}_o$, such that the instantaneous magnetic fields $\underline{B}_a(t)$, $\underline{B}_b(t)$ measured by the $n^{th}$ detector 2, and by coupled detectors 2 such as the $p^{th}$ detector 2, will deviate from the baseline field $\underline{B}_o$. In particular, steel components of the vehicle 7 may act as magnetic conductors, causing a focussing of the Earth's magnetic field lines below the steel components 7 and a relative weakening to either side. The precise pattern of distortions to the magnetic field observed will depend on the quantity and distribution of magnetic materials in a vehicle 7.

As a result of the vehicle 7 distorting the magnetic field $\underline{B}$, the first and second magnetic field sensors 6a, 6b of the $n^{th}$ detector 2 measure first and second magnetic field differences 35, 36 respectively. The first magnetic field sensor 6a of the $p^{th}$ detector 2 also measures a third magnetic field difference 37, and the second magnetic field sensor 6b of the $p^{th}$ detector 2 does not measure a substantial deviation from the baseline magnetic field $\underline{B}_o$. However, depending

on the quantity and distribution of magnetic materials in the vehicle 7, the second magnetic field sensor 6b of the $p^{th}$ detector 2 may measure a fourth deviation (not shown).

The first and second magnetic field differences 35, 36 may be used by the processing unit 3 to determine that the $n^{th}$ bay $P_n$ is occupied. The third 37 and fourth magnetic field differences are stored to the correction table 27 in the data object *correct(n,p,i)* as $\delta B_x{}^a$ and $\delta B_x{}^b$ (as entries *correct(n,p,1)* and *correct(n,p,4)*) respectively. Similar magnetic field differences are stored to the data object *correct(n,p,i)* as $\delta B_y{}^a$, $\delta B_z{}^a$, $\delta B_y{}^b$, $\delta B_z{}^b$. If a further vehicle 7 subsequently enters the $p^{th}$ bay $P_p$, the presence of that further vehicle 7 may be detected in dependence upon the deviation of the measured magnetic field values $Bx^a(t)$, $B_y{}^a(t)$, $B_z{}^a(t)$, $B_x{}^b(t)$, $B_y{}^b(t)$, $B_z{}^b(t)$ from a corrected baseline provided by subtracting the magnetic field difference values $\delta B_x{}^a$, $\delta B_y{}^a$, $\delta B_z{}^a$, $\delta B_x{}^b$, $\delta B_y{}^b$, $\delta B_z{}^b$ stored in *correct(n,p,i)* from the baseline values $B_x{}^{ao}$, $B_y{}^{ao}$, $B_z{}^{ao}$, $B_x{}^{bo}$, $B_y{}^{bo}$, $B_z{}^{bo}$ stored in *ref(n+1,i)*.

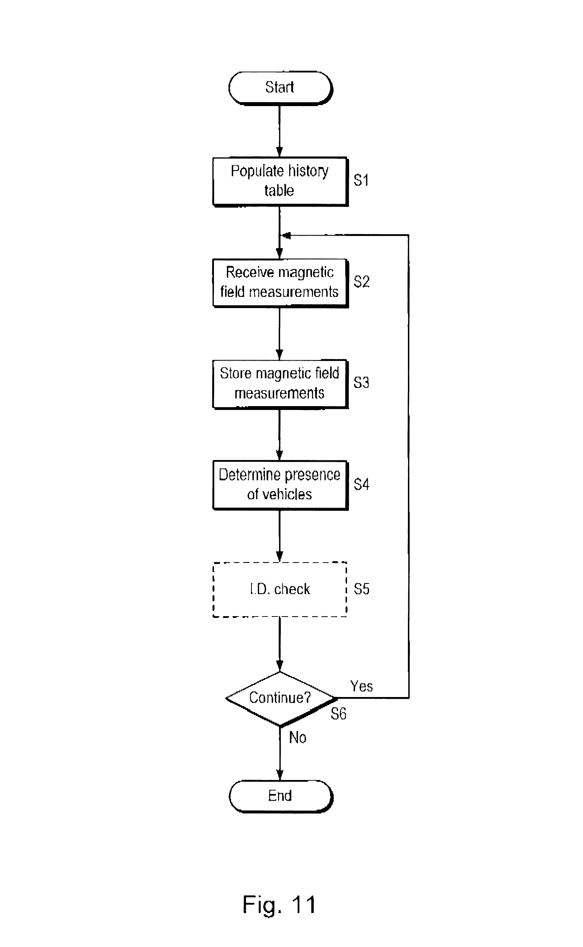

Referring to Figures 5 and 11, a first method of detecting vehicles 7 using a vehicle detection system 1 will now be described.

At start up, the processing unit 3 receives magnetic field measurements $\underline{\mathbf{B}}_a(t)$, $\underline{\mathbf{B}}_b(t)$ from all $N$ detectors 2 until the history table 8 is fully populated with the $T$ most recently received values (step S1). The processing unit 3 has a defined time period stored by a variable referred to herein as *stdSize*. In this case, *stdSize* = 1 s. However, other time periods may be set, such as, for example, 2 s or up to 10 s. The number $T$ of previous time periods stored should be large enough to span at least $10 \times stdSize$ seconds.

The processing unit 3 initialises an array referred to herein as *stdCalm(n)*, which is an array with $N$ entries, in which $n$ is an integer index defined in the same way as for the data structure *recent(τ,n,i)*. The $n^{th}$ entry of *stdCalm(n)* stores the standard deviation of the measured magnetic field values $B_x{}^a(t)$, $B_y{}^a(t)$, $B_z{}^a(t)$, $B_x{}^b(t)$, $B_y{}^b(t)$, $B_z{}^b(t)$ from the $n^{th}$ detector across the $10 \times stdSize$ seconds after start up. The $n^{th}$ entry of *stdCalm(n)* is calculated across all six individual measured magnetic field values $B_x{}^a(t)$, $B_y{}^a(t)$, $B_z{}^a(t)$, $B_x{}^b(t)$, $B_y{}^b(t)$, $B_z{}^b(t)$, such that *stdCalm(n)* is not specific to any axis ($1 \leq i \leq 6$) or the first or second magnetic field sensors 6a, 6b of the $n^{th}$ detector 2.

After start up, the processing unit 3 begins monitoring for vehicles 7. The processing unit 3 addresses each detector 2 in turn to request measurements, and each detector 2 sends magnetic field measurements $B_x{}^a(t)$, $B_y{}^a(t)$, $B_z{}^a(t)$, $B_x{}^b(t)$, $B_y{}^b(t)$, $B_z{}^b(t)$ to the processing unit 3 (step S2). The processing unit 3 receives magnetic field measurements $B_x{}^a(t)$, $B_y{}^a(t)$, $B_z{}^a(t)$, $B_x{}^b(t)$, $B_y{}^b(t)$, $B_z{}^b(t)$ from $M$ branches 5 independently and simultaneously. Each branch 5 reports magnetic field measurements $B_x{}^a(t)$, $B_y{}^a(t)$, $B_z{}^a(t)$, $B_x{}^b(t)$, $B_y{}^b(t)$, $B_z{}^b(t)$ at a maximum rate of 75 Hz/$N_m$, in which $N_m$ is the number of detectors 2 included in the $m^{th}$ branch 5 out of $M$ branches 5 in total. The overall update rate of the history table is determined according to the largest number of detectors $N_m$ in a single branch.

The processing unit 3 stores the most recently received magnetic field measurements $B_x{}^a(t)$, $B_y{}^a(t)$, $B_z{}^a(t)$, $B_x{}^b(t)$, $B_y{}^b(t)$, $B_z{}^b(t)$ to the history table 8. For each page 30, corresponding to each of $N$ detectors 2, the processing unit 3 increments the previously stored measurements in the data structure 29 *recent(τ,n,i)* by one, overwriting the τ=1 data object 31 corresponding to the oldest measurements with the τ=2 data object 31, and writing a data object 31 storing the most recent magnetic field measurements $B_x{}^a(t)$, $B_y{}^a(t)$, $B_z{}^a(t)$, $B_x{}^b(t)$, $B_y{}^b(t)$, $B_z{}^b(t)$ to the τ=T position (step S3).

The processing unit 3 determines the presence or absence of a vehicle 7 in the volume of space $S_n$ to which each detector 2 is sensitive in dependence upon the magnetic field measurements in the history table 8 (step $S_4$). The processing unit 3 may be configured to determine the presence of a vehicle in each volume in dependence upon the magnetic field measurements $B_x{}^a(t)$, $B_y{}^a(t)$, $B_z{}^a(t)$, $B_x{}^b(t)$, $B_y{}^b(t)$, $B_z{}^b(t)$ from detectors 2 corresponding to two or more bays $P_n$.

The processing unit 3 determines the presence of absence of a vehicle 7 in the volume of space $S_n$ to which each detector 2 is sensitive in dependence upon an $N$ by 6 array referred to herein as *signalExt(n,i)*, which is defined as:

$$signalExt(n,i) = abs\left( recent(T,n,i) - ref(n,i) - \sum_{p=1}^{N} \big( depend(n,p) \times correct(p,n,i) \big) \right) \quad (1)$$

in which $n$ and $i$ are integer indexes defined in the same way as for the data structure *recent(τ,n,i)* and in which $T$ refers to τ=T such that *signal(n,i)* is based upon the most recently received magnetic field measurements $B_x{}^a(t)$, $B_y{}^a(t)$, $B_z{}^a(t)$, $B_x{}^b(t)$, $B_y{}^b(t)$, $B_z{}^b(t)$, in which $p$ is an integer index which runs $1 \leq p \leq N$ such that $p$ refers to the $p^{th}$ detector 2 out of $N$ detectors in total.

Based upon *signalExt(n,i)*, an array with $N$ entries referred to herein as *signal(n)* is defined according to:

$$signal(n) = \sum_{i=1}^{6} \begin{cases} signalExt(n,i) & if \quad signalExt(n,i) > stdCalm(n) \\ 0 & if \quad signalExt(n,i) \leq stdCalm(n) \end{cases} \quad (2)$$

in which *n* and *i* are integer indexes defined in the same way as for the data structure *recent*($\tau$,*n*,*i*). During an iteration, if the value of *signal(n)* exceeds a threshold stored by a variable referred to herein as *thresh,* the corresponding volume of space $S_n$ is flagged as occupied, i.e. *occupy(n)* = 1. The same threshold *thresh* may be applied to each of *N* detectors 2. Alternatively, *thresh* may be an array with *N* entries such that *thresh(n)* may be applied to the $n^{th}$ of *N* detectors 2. In such a case, the threshold *thresh(n)* is specific to each detector, and may be defined as:

$$thresh(n) = stdcalm(n) \qquad (3)$$

in which *n* is an integer index defined in the same way as for the data structure *recent*($\tau$,*n*,*i*).

By using the data structures *depend(n,p)* and *correct(p,n,i)* to include the effects of coupling and distortions of magnetic field resulting from vehicles 7 occupying adjacent bays $P_n$, the vehicle detection system 1 can perform more reliably when magnetic field sensors 6 are used to monitor parking bays $P_n$ which are densely packed such that the corresponding volumes of space $S_n$ to which a detector 2 is sensitive at least partially encompass one or more adjacent bays $P_p$.

The occupancy of a given bay $P_p$ is not altered if a neighbouring/adjacent bay $P_n$ coupled to that bay $P_p$ by the data structure *depend(n,p)* has a larger value of *signal(n)* than the given bay $P_p$ during the current monitoring iteration, i.e. if *signal(n)* > *signal(p)*. Instead, only the neighbouring/adjacent bay $P_n$ having the larger value of *signal(n)* will be flagged as occupied. In this way, other bays $P_p$ which are coupled to an occupied bay $P_n$ by the data structure *depend(n, p)* are prevented from being erroneously flagged as occupied during a monitoring iteration in which the bay $P_n$ become occupied.

When the occupancy of a bay $P_n$ is altered, the correction values stored in the data structure *correct(p,n,i)* are updated for every other bay $P_p$ which is flagged as coupled to the bay $P_n$ in the data structure *depend(n,p)*. As a result, when a vehicle 7 enters a bay $P_n$, the updating of the correction values *correct(p,n,i)* prevents any coupled bays $P_p$ from being incorrectly flagged as occupied during subsequent monitoring iterations. In this way, the precise magnitudes of the corrections applied to the other bays $P_p$ which are coupled to an occupied bay $P_n$ are updated to reflect the magnitude of the distortion caused by the vehicle 7 occupying the bay $P_n$.

In this way, the vehicle detection system 1 can accurately correct for the effects on a coupled bay $P_p$ when a bay $P_n$ is occupied by a large vehicle such as, for example, a coach, bus, mini-bus, sports utility vehicle (SUV), pickup truck, truck, lorry or van, or when a bay $P_n$ is occupied by a small vehicle such as, for example, a small hatchback, ultra-compact car, city car, super-mini car or a micro car.

Equations 1 and 2 above define the arrays *signalExt(n,i)* and *signal(n)* on the basis of the most recently received magnetic field values. However, the processing unit 3 may alternatively determine the presence or absence of a vehicle 7 in the bay $P_n$ corresponding to the $n^{th}$ detector 2 in dependence upon the mean of the array *signal(n)* taken across two or more consecutive points in the time series stored in the history table. For example, the processing unit 3 may alternatively determine the presence or absence of a vehicle in the bay $P_n$ corresponding to each detector 2 in dependence upon a data structure referred to herein as *avg(To,n,i)* and defined as:

$$avg(T_0,n,i) = \frac{\sum_{\tau=T-T_0}^{T} abs\left( recent(\tau,n,i) - ref(n,i) - \sum_{p=1}^{N} (depend(n,p) \times correct(p,n,i)) \right)}{T - T_0} \qquad (4)$$

in which $\tau$, *n* and *i* are integer indexes defined in the same way as for the data structure *recent*($\tau$,*n*,*i*), $T_o$ is an integer such that $1 \leq T_o \leq T\text{-}_1$. The data structure *avg($T_o$,n,i)* is an *N* by 6 array parameterised by $T_o$. In such a case, the array *signal(n)* may be alternatively defined by substituting the data structure *avg(To,n,i)* for the array *signalExt(n,i)*.

Determining the presence or absence of a vehicle 7 based upon the data structure *avg(To,n,i)* defined with respect to two or more consecutive time points may help to reduce the incidence of false detections caused by electromagnetic noise.

Optionally, when the processing unit 3 determines that a vehicle has entered a bay $P_n$, the processing unit 3 may send challenge message data (not shown) to the corresponding detector 2 for transmission by an WPAN module 15 (step $S_5$). The detector 2 waits to receive a response message (not shown), and any response message data (not shown) captured by the NFC module 15 is relayed to the processing unit 3. If no response message data is received within a configurable elapsed time period, or if the response data does not match the correct response stored in the transceiver identity table 28, then an alarm flag (not shown) is set on the processing unit 3.

The processing unit 3 checks whether to continue monitoring for vehicles (step S6). By default, the processing unit 3 continues monitoring by addressing each detector 2 in turn to request measurements, and each detector 2 sends the first and second sets of magnetic field measurements $B_x^a(t)$, $B_y^a(t)$, $B_z^a(t)$, $B_x^b(t)$, $B_y^b(t)$, $B_z^b(t)$ to the processing unit 3 (Step S1). However, the processing unit 3 may stop monitoring in response to, for example, a command from a monitoring operative, or in order to save power during hours when a parking environment is closed or is not controlled.

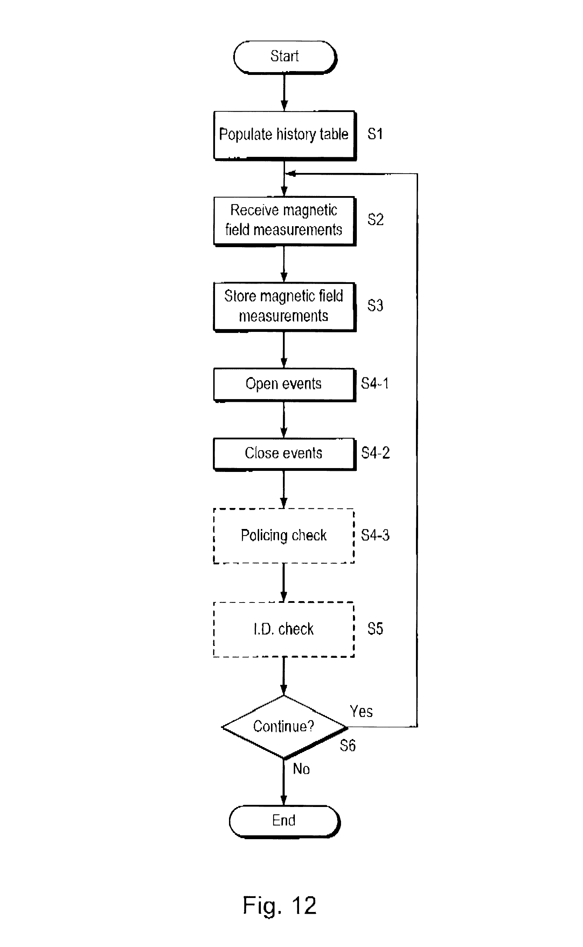

Referring to Figures 5, 11 and 12, a second method of detecting vehicles 7 using a vehicle detection system 1 will now be described.

The second method is the same as the first method, except that the determining the presence of a vehicle 7 in a volume of space is additionally based on the detection of events which correspond to occurrences such as vehicles arriving into or departing from a volume of space.

The processing unit 3 populates the history table (step S1), receives (step S2) and stores (step S3) magnetic field measurements $B_x^a(t)$, $B_y^a(t)$, $B_z^a(t)$, $B_x^b(t)$, $B_y^b(t)$, $B_z^b(t)$ in substantially the same way as the first method.

The processing unit 3 determines whether a local event has commenced at each of the $N$ detectors (step S4-1). The processing unit calculates an array referred to herein as *signalStd(n),* which is an array with $N$ entries, in which $n$ is an integer index defined in the same way as for the data structure *recent($\tau$,n,i).* The $n$th entry of *signalstd(n)* stores the standard deviation of the measured magnetic field values $B_x^a(t)$, $B_y^a(t)$, $B_z^a(t)$, $B_x^b(t)$, $B_y^b(t)$, $B_z^b(t)$ from the $n$th detector across the previous $10 \times stdSize$ seconds. In the same way as *stdCalm(n)*, *signalStd(n)* is not specific to any axis ($1 \le i \le 6$) or the first or second magnetic field sensors 6a, 6b of the $n$th detector 2, that is to say that the *signalStd(n)* values are averaged across all six axes of the pair of sensors 6a, 6b.

The values of *signalStd(n),* which are calculated using values spanning $10 \times stdSize$ seconds, may be significantly larger than the difference in signal before/after the vehicle 7 has finished parking in a bay $P_n$. This is because *signalStd(n)* values incorporate the effect of measured magnetic field values collected when the vehicle 7 is moving on top of the sensor, which typically includes the maximum deviations. Using values of *signalStd(n)* to determine local events reduces the possibility failing to detect a vehicle 7.

When a local event is initialised, a flag is set in an array referred to herein as *inEuent(n),* which stores *inEuent(n)* = o when the $n$th detector is not in a local event and *inevent(n)* =1 when the $n$th detector is in a local event. A local event is not initialised for the $n$th detector during an iteration if it is already in a local event, i.e. when *inevent(n) = 1.*

A local event is initialised for the $n$th detector 2 if *signalStd(n)* exceeds $3 \times stdcalm.$ If the $n$th detector 2 is coupled to the $p$th detector 2 according to the data structure *depend(n,p),* then initialising a local event for the $n$th detector is cancelled if *signalStd(p)* exceeds *signalStd(n).* When a local event is initialised, the processing unit 3 stores the value of *signalExt(n,i)* calculated according to Equation 1 to an array referred to herein as *eventStart(n,i),* in which $n$ and $i$ are integer indexes defined in the same way as for the data structure *recenf($\tau$,n,i).* The values of *signalExt(p,i)* are also calculated and stored to *eventStart(p,i)* for every $p$th detector which is coupled to the $n$th detector according to the data structure *depend(n,p).* A separate instance of *eventStart(n,i)* is created for each local event. Alternatively, *eventStart(n, i)* may store values of *avg($T_o$,n,i)* calculated according to Equation 4 above.

The processing unit 3 determines whether a local event has terminated at each of the $N$ detectors, based upon the value of *signalStd(n)* (step S4-2). If *inEvent(n)* = 1 and *signalStd(n)* is less than $3 \times stdcalm$ then a local event is terminated. When a local event is terminated, the processing unit 3 stores the value of *signalExt(n,i)* calculated according to Equation 1 to an array referred to herein as *eventEnd(n,i),* in which $n$ and $i$ are integer indexes defined in the same way as for the data structure *recent($\tau$,n,i).* The values of *signalExt(p,i)* are also calculated and stored to *eventEnd(p,i)* for every $p$th detector which is coupled to the $n$th detector according to the data structure *depend(n,p).* Alternatively, *eventEnd(n,i)* may store values of *avg(To,n,i)* calculated according to Equation 4 above.

When a local event corresponding to the $n$th detector is closed, the processing unit determines whether the occupancy of the respective bay $P_n$ has changed based on the values stored in an array referred to herein as *eventDiff(n),* defined as:

$$eventDiff(n) = \sum_{i=1}^{6} abs(eventEnd(n,i)) - \sum_{i=1}^{6} abs(eventStart(n,i)) \qquad (5)$$

in which $n$ and $i$ are integer indexes defined in the same way as for the data structure *recent($\tau$,n,i).* The array *euentDiff(n)* has $N$ entries. The $n$th entry of *eventdiff(n)* stores a measure of the change in measured magnetic field values $B_x^a(t)$, $B_y^a(t)$, $B_z^a(t)$, $B_x^b(t)$, $B_y^b(t)$, $B_z^b(t)$ between the start and end of an event. A second array with $N$ entries, referred to herein as *eventcompare(n)* is defined as:

$$eventCompare(n) = \sum_{i=1}^{6} abs(recent(T_{end},n,i) - recent(T_{start},n,i)) \qquad (6)$$

in which $n$ and $i$ are integer indexes defined in the same way as for the data structure $recent(\tau,n,i)$, $T_{end}$ is the value of the index $\tau$ corresponding to the iteration in which the event was closed, which will by $T_{end} = T$ and $T_{start}$ is the value of the index $\tau$ corresponding to the iteration in which the event was opened, which will be $T_{start} < T$. The $n^{th}$ entry of $eventDiff(n)$ stores the overall difference in the measured magnetic field values $B_x{}^a(t)$, $B_y{}^a(t)$, $B_z{}^a(t)$, $B_x{}^b(t)$, $B_y{}^b(t)$, $B_z{}^b(t)$ between the start and end of an event. Alternatively, where $eventStart(n,i)$ and $eventEnd(n,i)$ are based upon $avg(To, n,i)$, $eventCompare(n)$ may be calculated based on averaging the values $recent(T_{end},n,i)$ to $recent(T_{end}\text{-}T_o,n,i)$ and averaging the values $recent(T_{start},n,i)$ to $recent(T_{start}\text{-}T_o,n,i)$.

Whether there is a change of occupancy for the $n^{th}$ bay $P_n$ is determined based upon the ratio of $eventDiff(n)/eventCompare(n)$. The ratio of $eventDiff(n)/eventCompare(n)$ is a number between -1 and 1. If the $n^{th}$ bay $P_n$ is flagged as occupied, $occupy(n) = 1$, and the ratio of $eventDiff(n)/eventcompare(n)$ is less than -0.8, then the occupancy for the $n^{th}$ bay $P_n$ is changed to unoccupied, $occupy(n) = o$. If the $n^{th}$ bay $P_n$ is flagged as unoccupied, $occupy(n) = 10$, and the ratio of $eventDiff(n)/eventCompare(n)$ is greater than 0.8, then the occupancy for the $n^{th}$ bay $P_n$ is changed to occupied, $occupy(n) = 1$.

When the occupancy of the $n^{th}$ bay $P_n$ is changed to occupied, the corresponding correction values stored in the data structure $correct(p,n,i)$ for each $p^{th}$ detector which is coupled to the $n^{th}$ detector by the data structure $depend(n, p)$ are updated based on the differences $event.end(p,i) - event.start(p,i)$. When the occupancy of the $n^{th}$ bay $P_n$ is changed to unoccupied, the corresponding correction values stored in the data structure $correct(p,n,i)$ for each $p^{th}$ detector which is coupled to the $n^{th}$ detector by the data structure $depend(n,p)$ are set to zero. The processing unit 3 may wait until there are no active local events corresponding to any of the $n^{th}$ bay and every $p^{th}$ bay coupled to the $n^{th}$ bay before updating the respective values stored in the data structure $correct(p,n,i)$.

The termination of a local event need not be determined based upon the value of $signalStd(n)$. Instead, the history table 8 may additionally include a data structure $recentStd(\tau,n)$, in which $\tau$ and n are integer indexes defined as for $recent(\tau,n,i)$. In such a case, the termination of a local event may be based upon the values stored in $recentStd(\tau,n)$ having been less than $3 \times stdCalm$ for a period of time such as, for example, $stdSize$ seconds, or $3\times stdSize$ seconds, or $5\times stdSize$ seconds or longer.

Optionally, the processing unit 3 may perform a policing check when there are no local events active (i.e. $inEvent(n) = o$ for $1 \le n \le N$) (step $S_{4\text{-}3}$). For example, the processing unit 3 may store an array referred to herein as $policeUp(n)$ which is an array having $N$ entries. If the $n^{th}$ bay $P_n$ is unoccupied, i.e. $occupy(n)=o$, then if $signal(n)$ exceeds $thresh(n)$ during an iteration in which $signalStd(n)$ is less than $stdCalm(n)$, the corresponding value of $policeUp(n)$ is increased by one. If any of these conditions are not satisfied on a subsequent iteration, then the value of $policeUp(n)$ is reset to zero. If the value of $policeUp(n)$ exceeds a predetermined number, for example 20, then the occupancy of the $n^{th}$ bay $P_n$ is changed to occupied.

Similarly, the processing unit 3 may store an array referred to herein as $policeDown(n)$ which is an array having N entries. If the $n^{th}$ bay $P_n$ is occupied, i.e. $occupy(n)=1$, then if $signal(n)$ does not exceed $thresh(n)$ during an iteration in which $signalStd(n)$ is less than $stdcalm(n)$, the corresponding value of $policeDown(n)$ is increased by one. If any of these conditions are not satisfied on a subsequent iteration, then the value of $policeDown(n)$ is reset to zero. If the value of $policeDown(n)$ exceeds a predetermined number, for example 20, then the occupancy of the $n^{th}$ bay $P_n$ is changed to unoccupied.

In this way, even where an event of a vehicle arriving or leaving a bay $P_n$ is missed or not captured at the time, the vehicle detection system 1 can subsequently correct the problem to maintain the accuracy of the monitoring.

Traffic monitoring system

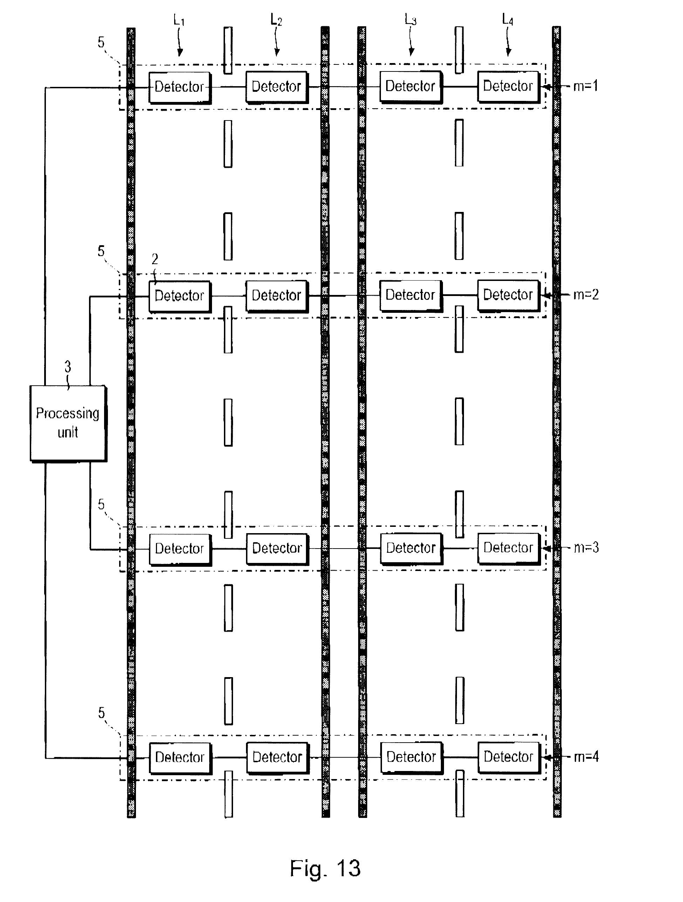

Referring to Figure 13, the vehicle detections system 1 may be used to monitor the volume and speed of traffic on a road. The road has four lanes, $L_1$, $L_2$, $L_3$ and $L_4$ and detectors 2 are sensitive to volumes of space which encompass at least part of, for example all of, the lanes $L_1$, $L_2$, $L_3$, $L_4$. Detectors 2 are connected in series to form four branches 5, $m=1$, $m=2$, $m=3$ and $m=4$. Each branch 5 includes one detector 2 corresponding to each of the four lanes $L_1$, $L_2$, $L_3$, $L_4$, and the detectors 2 belonging to the different branches 5 are spread out along each lane $L_1$, $L_2$, $L_3$, $L_4$.

Alternatively, more or fewer lanes L may contain detectors 2. Branches 5 need not be connected so as to span the lanes L, and may alternatively be connected in series such that several detectors 2 corresponding to a single lane L are connected in the same branch 5.

When used for traffic monitoring, the vehicle detection system 1 has the same processing unit 3 and detectors 2 as are used to monitor a parking environment. The operation of the processing unit 3 is substantially the same as when the vehicle detection system monitors a parking environment, except that the processing unit does not determine whether parking bays P are occupied based upon the magnetic field measurements stored in the history table 8 by the data structure $recent(\tau,n,i)$. Instead, the processing unit 3 determines the speeds of vehicles based on the magnetic field measurements stored in the history table 8 by the data structure $recent(\tau,n,i)$. The data structure $recent(\tau,n,i)$ is used to calculate the array $signalStd(n)$ in the same way as for the vehicle parking system. However, in the case of a traffic monitoring system, the total number of detectors may be lower and the refresh rate of the history table 8 may be higher than for a vehicle parking system.

The processing unit 3 determines that a vehicle 7 has arrived at the $n^{th}$ detector 2 when the corresponding value of *signalStd(n)* exceeds $3\times stdCalm(n)$. The processing unit 3 determines that a vehicle 7 has departed from the $n^{th}$ detector 2 when the corresponding value of *signalStd(n)* drops back below $3\times stdCalm(n)$. The processing unit 3 may determine the delay between the vehicle 7 arriving/departing from successive detectors 2 in the direction of travel in order to determine a speed of the vehicle 7.

The processing unit 3 may also count the numbers of vehicles 7 which pass along each lane $L_1$, $L_2$, $L_3$, $L_4$. The processing unit 3 may also estimate the number of heavy goods vehicles, trucks or lorries using the road based upon the magnitudes of the detected disturbances to the measured magnetic field values.

When the vehicle detection system 1 is used for traffic monitoring, the data structure *depend(n,p)* may record which detectors 2 are coupled, for example, detectors 2 disposed under adjacent lanes $L_1$, $L_2$, $L_3$, $L_4$ When monitoring traffic, the vehicle detection system 1 may reject a signal from a detector 2 if an adjacent coupled detector 2 records a larger value of *signalStd(n).* The branches 5 and detectors 2 may be configured so that coupled detectors may report to the processing unit 3 substantially simultaneously.

When the vehicle detection system 1 is used for traffic monitoring, an event may be initialised for a lane $L_1$, $L_2$, $L_3$, $L_4$ at the time when a first detector 2 within that lane in the direction of vehicle 7 travel has the corresponding value of *signalStd(n)* exceed $3\times stdCalm(n)$ and terminated at the time when a last detector 2 within the same lane has the corresponding value of *signalStd(n)* drop back below $3\times stdCalm(n)$.

Traffic signal management

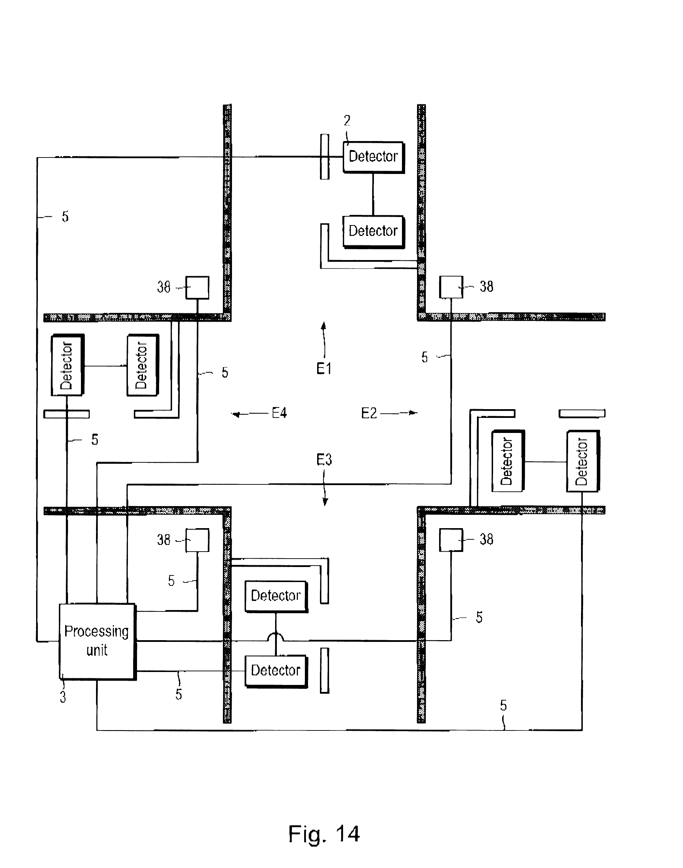

Referring to Figure 14, the vehicle detection system 1 may be used for traffic signal management at a junction controlled by automated traffic signals 38. When an entrance lane $E_1$, $E_2$, $E_3$, $E_4$ is signalled to stop by the signals 38, the vehicle detection system 1 may monitor whether, and how many, vehicles are waiting in the entrance lane $E_1$, $E_2$, $E_3$, $E_4$ in substantially the same way as the vehicle detection system 1 monitors a parking environment. When an entrance lane $E_1$, $E_2$, $E_3$, $E_4$ is signalled to proceed by the signals 38, the vehicle detection system 1 may detect traffic volumes and speeds in substantially the same way as the vehicle detection system 1 monitors traffic on a road.

By providing information about both the existence of queuing vehicles and additionally the volume of traffic passing down each approach lane when that lane is signalled to proceed, the traffic signals 38 are enabled to more accurately and reliably perform dynamic adjustments of traffic signal scheduling to maintain traffic flows.

The vehicle detection system 1 is shown in Figure 14 with detectors 2 emplaced only in the approach lanes to the traffic signal 38 controlled junction. Alternatively, detectors may additionally be emplaced in the exit lanes, allowing the processing unit 3 to infer the distribution of traffic passing from each entrance lane to each of the exit lanes.

Numerous vehicle detection systems 1, each controlling different junctions, may communicate with each other or with a central client via local networks or the internet to optimise traffic flows in an urban area.

Modifications

It will be appreciated that many modifications may be made to the embodiments hereinbefore described.

Detectors 2 have been described as comprising a pair of magnetic field sensors 6a, 6b, housed in respective first and second units 9, 10. However, detectors may employ more than two sensors 6. Vehicles may not be positioned precisely in a volume of space, and magnetic materials may be unevenly distributed in a vehicle 7, such that the size of magnetic field variations within a volume of space may be uneven. A single sensor may have blind spots and fail to detect the largest/most significant magnetic field variations. Using a pair of sensors 6a, 6b may help to improve the accuracy and reliability of detecting a vehicle by reducing or eliminating sensor blind spots. Adding further sensors, for example a total of three sensors 6, four sensors 6 or more, may further improve accuracy and reliability. Where more than two sensors 6 are used, each may be housed in a separate unit, and each unit being spaced from the other units by one or more link members 11.

The detectors 2 have been described as being encapsulated to the IP-68 certification standard. However, other standards or levels of ingress protection may used for the detector(s) 2, depending upon the physical and regulatory environment in which the detector(s) 2 are to be deployed.

The controller 12 has been described as being in the form of an Atmel ATmega328P-AU incorporating an Arduino (RTM) Bootloader microcontroller. However, the controller 12 may alternatively be provided by any other suitable microcontroller. The controller 12 need not be a microcontroller and may alternatively be provided by a field programmable gate array, a microprocessor or a dedicated integrated circuit.

The magnetic field sensors 6 have been described as being in the form of Honeywell HMC5883L magnetic field 3D sensors. However, the magnetic field sensors 6 need not be Honeywell HMC5883L magnetic field 3D sensors.

Other types of anisotropic magnetic field sensors may be used instead.

Alternatively, the magnetic field sensors 6 need not be anisotropic magnetoresistance sensors, and any magnetic field sensor having sufficient sensitivity to detect changes in local magnetic field due to a vehicle 7 may be used such as, for example, Hall probes or giant magnetoresistance sensors. The magnetic field sensors 6 may be provided by any type of sensor having an output rate of more than 1 Hz, between 1 and 10 Hz, between 10 and 100 Hz or more than 100 Hz. The magnetic field sensors 6 may be provided by any type of sensor having a resolution equal to or better than $1 \times 10^{-7}$ T. The magnetic field sensors 6 need not use a 12-bit ADC, and may use, for example, an ADC operating at 8-bit, 16-bit, 32-bit or greater precision.

The optional WPAN module 15 has been described as having a transmission power allowing communication with a transceiver up to 5 m away. However, the WPAN module 15 may have a transmission power to allow communication up to 10 m away or further.

The optional WPAN module has been described as being a Zigbee (RTM) module. However, the WPAN module need not be a Zigbee (RTM) module, and other protocols may be used for WPAN communications such as, for example, Bluetooth (RTM), IEEE 802.11, IEEE 802.15.4, Z-wave (RTM) or similar.

Vehicles 7 may include internal combustion engine(s). Vehicles 7 may include electric motor(s). Vehicles 7 may be hybrid vehicles including internal combustion engine(s) and electric motor(s). Vehicles 7 may be unpowered vehicles designed to be towed by another vehicle such as, for example, caravans, trailers, construction equipment or agricultural equipment. Trailers may be small trailers for cars or large trailers for trucks.

**Claims**

1. A vehicle detection system comprising:

    at least one detector, each detector configured to measure magnetic field in a respective volume of space, each detector comprising at least two spaced-apart magnetic field sensors including first and second magnetic field sensors , each magnetic field sensor configured to provide a time series of instantaneous magnetic field measurements; and
    a processing unit configured to receive the time series of instantaneous magnetic field measurements, to store the time series of instantaneous magnetic field measurements in a table and to determine presence of a vehicle in each volume in dependence upon the magnetic field measurements in the table.

2. A vehicle detection system according to claim 1, wherein the processing unit is configured to determine one or more of a speed of a vehicle in a volume, a vehicle entering a volume, a vehicle exiting a volume and a direction of motion of a vehicle in a volume.

3. A vehicle detection system according to claims 1 or 2, wherein magnetic field sensors are spaced-apart by at least 15 cm.

4. A vehicle detection system according to claims 1 or 2, wherein each detector comprises:

    first and second units which are spaced-apart; and
    a link connecting the first and second units,
    wherein the first and second magnetic field sensors are disposed in the first and second units respectively.

5. A vehicle detection system according to any preceding claim, comprising:

    a cable comprising two or more detectors spaced along the cable, wherein the detectors are connected to the cable in a bus configuration.

6. A vehicle detection system according to any preceding claim, further comprising:

    a short-range wireless transceiver configured to exchange signals with a corresponding short-range wireless transceiver of a vehicle so as to capture the identity of vehicle.

7. A vehicle detection system according to any preceding claim, wherein the processing unit is configured to determine the presence of a vehicle in each volume in dependence upon the magnetic field measurements corresponding to two or more volumes.

8. A vehicle detection system according to any preceding claim, wherein the processing unit is configured to determine the presence of a vehicle in each volume in dependence upon the magnetic field measurements corresponding to two or more consecutive points in the time series.

9. A vehicle detection system according to any preceding claim, wherein the processing unit is configured to detect a start of an event and an end of an event in a volume in dependence upon a variance of the respective magnetic field measurements calculated based on a number of consecutive points in the time series.

10. A vehicle detection system according to any preceding claim, wherein the processing unit is configured to store an occupancy flag corresponding to a detection volume in a second table in response to determining the presence of a vehicle in that detection volume.

11. A vehicle detection system according to claim 10, wherein when an event is not detected, the processor is configured to execute a policing control check such that the occupancy flag of each detection volume is reversed if a threshold number of magnetic field measurements are consecutively stored in the table, each of the threshold number of magnetic field measurements being inconsistent with the respective occupancy flag stored in the second table.

12. A method comprising:

receiving a time series of instantaneous magnetic field measurements from at least one detector, each detector including at least two spaced-apart magnetic field sensors including first and second magnetic field sensors; storing the time series of instantaneous magnetic field measurements in a table; and determining presence of a vehicle in each volume in dependence upon the magnetic field measurements in the table.

13. A method according to claim 12, further comprising:

determining one or more of a speed of a vehicle in a detection volume, a vehicle entering a volume, a vehicle exiting a volume and a direction of motion of a vehicle in a volume.

14. A computer program comprising instructions which, when executed by at least one processing unit, cause the processing unit to perform a method according to claim 13 or 14.

15. A computer readable medium storing the computer program according to claim 14.

Fig. 1

Fig. 2

Fig. 3

Fig. 4

Fig. 5

EP 3 091 372 A1

29

recent

30

recent($\tau$,N,i)

recent(1,N,i)

recent(2,N,i)

recent(3,N,i)

recent(T-1,N,i)

recent(T,N,I)

30

recent($\tau$,3,i)

30

recent($\tau$,2,i)

,3,i)

,3,i)

,3,i)

30

recent($\tau$,1,i)

31 — recent(1,1,i)     ,2,i)

31 — recent(2,1,i)     ,2,i)

31 — recent(3,1,i)

,1,3,i)

,1,2,i)     ,3,i)

31 — recent(T-1,1,i)   ,2,i)

31 — recent(T,1,i)

## Fig. 6

31

recent(T,n,i)

| $B_x{}^a(t)$ | $B_y{}^a(t)$ | $B_z{}^a(t)$ | $B_x{}^b(t)$ | $B_y{}^b(t)$ | $B_z{}^b(t)$ |

$\underline{B}_a(t)$          $\underline{B}_b(t)$

## Fig. 7

Fig. 8A

Fig. 8B

Fig. 8C

$$depend = \begin{pmatrix}
0 & 1 & 0 & 0 & 1 & 0 & 0 & 0 & 0 & 0 & 0 & 0 & 0 & 0 & 0 & 0 \\
1 & 0 & 1 & 0 & 0 & 1 & 0 & 0 & 0 & 0 & 0 & 0 & 0 & 0 & 0 & 0 \\
0 & 1 & 0 & 1 & 0 & 0 & 1 & 0 & 0 & 0 & 0 & 0 & 0 & 0 & 0 & 0 \\
0 & 0 & 1 & 0 & 0 & 0 & 0 & 1 & 0 & 0 & 0 & 0 & 0 & 0 & 0 & 0 \\
1 & 0 & 0 & 0 & 0 & 1 & 0 & 0 & 0 & 0 & 0 & 0 & 0 & 0 & 0 & 0 \\
0 & 1 & 0 & 0 & 1 & 0 & 1 & 0 & 0 & 0 & 0 & 0 & 0 & 0 & 0 & 0 \\
0 & 0 & 1 & 0 & 0 & 1 & 0 & 1 & 0 & 0 & 0 & 0 & 0 & 0 & 0 & 0 \\
0 & 0 & 0 & 1 & 0 & 0 & 1 & 0 & 0 & 0 & 0 & 0 & 0 & 0 & 0 & 0 \\
0 & 0 & 0 & 0 & 0 & 0 & 0 & 0 & 0 & 1 & 0 & 0 & 1 & 0 & 0 & 0 \\
0 & 0 & 0 & 0 & 0 & 0 & 0 & 0 & 1 & 0 & 1 & 0 & 0 & 1 & 0 & 0 \\
0 & 0 & 0 & 0 & 0 & 0 & 0 & 0 & 0 & 1 & 0 & 1 & 0 & 0 & 1 & 0 \\
0 & 0 & 0 & 0 & 0 & 0 & 0 & 0 & 0 & 0 & 1 & 0 & 0 & 0 & 0 & 1 \\
0 & 0 & 0 & 0 & 0 & 0 & 0 & 0 & 1 & 0 & 0 & 0 & 0 & 1 & 0 & 0 \\
0 & 0 & 0 & 0 & 0 & 0 & 0 & 0 & 0 & 1 & 0 & 0 & 1 & 0 & 1 & 0 \\
0 & 0 & 0 & 0 & 0 & 0 & 0 & 0 & 0 & 0 & 1 & 0 & 0 & 1 & 0 & 1 \\
0 & 0 & 0 & 0 & 0 & 0 & 0 & 0 & 0 & 0 & 0 & 1 & 0 & 0 & 1 & 0
\end{pmatrix}$$

## Fig. 9A

$$depend = \begin{pmatrix}
0 & 1 & 0 & 0 & 1 & 1 & 0 & 0 & 0 & 0 & 0 & 0 & 0 & 0 & 0 & 0 \\
1 & 0 & 1 & 0 & 1 & 1 & 1 & 0 & 0 & 0 & 0 & 0 & 0 & 0 & 0 & 0 \\
0 & 1 & 0 & 1 & 0 & 1 & 1 & 1 & 0 & 0 & 0 & 0 & 0 & 0 & 0 & 0 \\
0 & 0 & 1 & 0 & 0 & 0 & 1 & 1 & 0 & 0 & 0 & 0 & 0 & 0 & 0 & 0 \\
1 & 1 & 0 & 0 & 0 & 1 & 0 & 0 & 0 & 0 & 0 & 0 & 0 & 0 & 0 & 0 \\
1 & 1 & 1 & 0 & 1 & 0 & 1 & 0 & 0 & 0 & 0 & 0 & 0 & 0 & 0 & 0 \\
0 & 1 & 1 & 1 & 0 & 1 & 0 & 1 & 0 & 0 & 0 & 0 & 0 & 0 & 0 & 0 \\
0 & 0 & 1 & 1 & 0 & 0 & 1 & 0 & 0 & 0 & 0 & 0 & 0 & 0 & 0 & 0 \\
0 & 0 & 0 & 0 & 0 & 0 & 0 & 0 & 0 & 1 & 0 & 0 & 1 & 1 & 0 & 0 \\
0 & 0 & 0 & 0 & 0 & 0 & 0 & 0 & 1 & 0 & 1 & 0 & 1 & 1 & 1 & 0 \\
0 & 0 & 0 & 0 & 0 & 0 & 0 & 0 & 1 & 0 & 1 & 0 & 1 & 1 & 1 & 1 \\
0 & 0 & 0 & 0 & 0 & 0 & 0 & 0 & 0 & 0 & 1 & 0 & 0 & 0 & 1 & 1 \\
0 & 0 & 0 & 0 & 0 & 0 & 0 & 0 & 1 & 1 & 0 & 0 & 0 & 1 & 0 & 0 \\
0 & 0 & 0 & 0 & 0 & 0 & 0 & 0 & 1 & 1 & 1 & 0 & 1 & 0 & 1 & 0 \\
0 & 0 & 0 & 0 & 0 & 0 & 0 & 0 & 0 & 1 & 1 & 1 & 0 & 1 & 0 & 1 \\
0 & 0 & 0 & 0 & 0 & 0 & 0 & 0 & 0 & 0 & 1 & 1 & 0 & 0 & 1 & 0
\end{pmatrix}$$

## Fig. 9B

Fig. 10A

Fig. 10B

Fig. 11

Fig. 12

Fig. 13

Fig. 14

Europäisches
Patentamt

European
Patent Office

Office européen
des brevets

# EUROPEAN SEARCH REPORT

Application Number

EP 15 38 0017

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 7 765 056 B2 (CATTIN VIVIANE [FR] ET AL) 27 July 2010 (2010-07-27) <br> * abstract; figures 1-3,6 * <br> * column 1, line 33 - line 41 * <br> * column 1, line 62 - column 2, line 4 * <br> * column 5, line 12 - line 63 * <br> * column 7, line 61 - line 67 * <br> * column 8, line 35 - line 39 * <br> ----- | 1-15 | INV.<br>G01V3/08<br>G08G1/042 |
| X | EP 2 503 529 A1 (THALES DEFENCE & SECURITY SYSTEMS GMBH [DE]) 26 September 2012 (2012-09-26) <br> * paragraph [0018]; figure 3 * <br> * column 12, line 43 - line 44 * <br> * column 11, paragraph 0039 - paragraph 0041 * <br> * paragraph [0033] * <br> ----- | 1,10-12 | |
| X <br><br> A | GB 2 300 291 A (POWER MAGNETICS AND ELECTRONIC [GB]) 30 October 1996 (1996-10-30) <br> * abstract; figure 1 * <br> * page 3, line 3 - line 25 * <br> * page 5, line 8 - line 25 * <br> * page 6, line 27 - page 7, line 2 * <br> ----- | 1-5, 12-15 <br><br> 6-11 | |
| | | | TECHNICAL FIELDS SEARCHED (IPC) |
| | | | G01V <br> G08G |
| X | WO 2010/071942 A1 (VEHICLE MONITORING SYSTEMS PTY [AU]; WELCH FRASER JOHN [AU]) 1 July 2010 (2010-07-01) <br> * abstract; claim 12; figure 2 * <br> * page 23, line 2 - line 20 * <br> * page 7, line 24 - page 8, line 7 * <br> ----- <br> -/-- | 1,8-12 | |

The present search report has been drawn up for all claims

| Place of search | Date of completion of the search | Examiner |
|---|---|---|
| The Hague | 24 November 2015 | De Bekker, Ruben |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 15 38 0017

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 95/28693 A1 (HONEYWELL INC [US]) 26 October 1995 (1995-10-26) * abstract; claim 6; figures 4-11 * * page 5, line 13 - line 28 * * page 6, line 7 - line 10 * * page 8, line 13 - line 21 * * page 7, line 20 - page 8, line 6 * ----- | 1-5,7-9, 12-15 | |
| X | FR 2 790 834 A1 (GENDRIER PHILIPPE [FR]) 15 September 2000 (2000-09-15) * abstract; claim 4; figures 2,16-19 * * page 9, line 23 - line 30 * * page 10, line 36 - page 11, line 5 * ----- | 1-5,7-9, 12-15 | |
| X | EP 0 841 647 A1 (DEUTSCHE FORSCH LUFT RAUMFAHRT [DE]) 13 May 1998 (1998-05-13) * page 3, line 52 - page 4, line 7; figures 2,4 * * page 2, line 45 - line 52 * * page 6, line 36 - line 38 * ----- | 1-5, 12-15 | |

TECHNICAL FIELDS
SEARCHED      (IPC)

The present search report has been drawn up for all claims

| Place of search | Date of completion of the search | Examiner |
|---|---|---|
| The Hague | 24 November 2015 | De Bekker, Ruben |

# EP 3 091 372 A1

## ANNEX TO THE EUROPEAN SEARCH REPORT
## ON EUROPEAN PATENT APPLICATION NO.

EP 15 38 0017

24-11-2015

| Patent document cited in search report | | Publication date | Patent family member(s) | | Publication date |
|---|---|---|---|---|---|
| US 7765056 | B2 | 27-07-2010 | AT | 440354 T | 15-09-2009 |
| | | | EP | 1811479 A1 | 25-07-2007 |
| | | | ES | 2332068 T3 | 25-01-2010 |
| | | | FR | 2896070 A1 | 13-07-2007 |
| | | | JP | 5068546 B2 | 07-11-2012 |
| | | | JP | 2007188503 A | 26-07-2007 |
| | | | US | 2007162218 A1 | 12-07-2007 |
| EP 2503529 | A1 | 26-09-2012 | DE | 102011014855 A1 | 27-09-2012 |
| | | | EP | 2503529 A1 | 26-09-2012 |
| GB 2300291 | A | 30-10-1996 | GB | 2300291 A | 30-10-1996 |
| | | | GB | 2300292 A | 30-10-1996 |
| WO 2010071942 | A1 | 01-07-2010 | AU | 2009329831 A1 | 21-07-2011 |
| | | | CA | 2748333 A1 | 01-07-2010 |
| | | | EP | 2380143 A1 | 26-10-2011 |
| | | | US | 2012007983 A1 | 12-01-2012 |
| | | | WO | 2010071942 A1 | 01-07-2010 |
| WO 9528693 | A1 | 26-10-1995 | JP | 3375968 B2 | 10-02-2003 |
| | | | JP | H09512118 A | 02-12-1997 |
| | | | WO | 9528693 A1 | 26-10-1995 |
| FR 2790834 | A1 | 15-09-2000 | NONE | | |
| EP 0841647 | A1 | 13-05-1998 | DE | 19646632 C1 | 14-05-1998 |
| | | | EP | 0841647 A1 | 13-05-1998 |

EPO FORM P0459

For more details about this annex : see Official Journal of the European Patent Office, No. 12/82

**EP 3 091 372 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6546344 B1